# EUROPEAN PATENT SPECIFICATION

(11) **EP 3 497 938 B1**
(45) Date of publication and mention of the grant of the patent: **13.04.2022**
(21) Application number: 17757921.6
(22) Date of filing: 27.07.2017
(51) Int. Cl.: H04N 21/433, H04N 21/472

(54) **SYSTEMS AND METHODS FOR PERFORMING ADAPTIVE SCHEDULING OF MEDIA ASSET RECORDINGS**
SYSTEME UND VERFAHREN ZUR ADAPTIVEN PLANUNG DER AUFZEICHNUNGEN VON MEDIENBESTÄNDEN
SYSTÈMES ET PROCÉDÉS PERMETTANT D'EFFECTUER UNE PROGRAMMATION ADAPTATIVE D'ENREGISTREMENTS DE CONTENUS MULTIMÉDIA

(30) Priority: 12.08.2016 US 201615236132
(43) Date of publication of application: 19.06.2019
(73) Proprietor: Rovi Guides, Inc., San Jose, CA 95002 (US)
(72) Inventor: GUPTA, Ajay, Kumar, Andover, MA 01810 (US); PULIKUNTA, Sai Rahul, Reddy, Andover, MA 01810 (US)
(74) Representative: Haley Guiliano International LLP
(86) International application number: PCT/US2017/044203
(87) International publication number: WO 2018/031245

(56) References cited:
- US-A1- 2004 103 434
- US-A1- 2010 260 473
- US-A1- 2012 036 537
- US-A1- 2013 347 037
- US-A1- 2015 082 344
- US-A1- 2016 165 175
- US-A1- 2016 212 492

## Description

### Background

Conventional media systems process information in media guidance data that is received and updated periodically from media service providers. Some conventional systems process the periodically updated media guidance data in order to update scheduled recordings of programs by determining the presence of key terms in the media guidance data. For example, these conventional media systems search the updated media guidance data for names of a party of interest, and update a scheduled recording based on the presence or absence of the names in the updated media guidance data. These conventional systems are only able to schedule or cancel a future recording conditioned on whether a participant appears in the media guidance data for a future scheduled program. Additionally, the scheduling and updating of these recordings is dependent on the interval at which the media guidance data is updated. For example, if media guidance data is updated once every two days, then the conventional systems that condition updating of scheduled recordings based on said media guidance data would be unable to update the scheduling of recordings based on events that occur within a single day. For example, the conventional systems would be unable to update the scheduling of recordings at any interval shorter than the two day update interval.

The document US-A-2016/165175 shows a media guidance application whereby the list of scheduled recordings is generated according to the user's interest for a TV series. Such TV series is associated to a score, a ranking, a number, which signals the popularity of the TV series. When such ranking is above a threshold, the list of scheduled recordings is maintained, whereas when it is below, the list of scheduled recording is cancelled.

The document US-A-2015/082344, shows a technique whereby the scheduled recording of a baseball game may be first added and then deleted as function of the outcome of the match itself, i.e. when the selected team looses the game.

### Summary

The invention is defined by the appended claims. Systems and methods are described to address shortcomings in the conventional media systems via a novel technique to update a list of scheduled recordings for a plurality of instances in a set of media assets. The plurality of media assets in the set of media assets may be related to the same competition. The list of scheduled recordings may be generated based on a user's request to schedule recordings for instances of media assets in which a participant of interest to the user may appear. Systems and methods implementing the novel technique determine a competition rule for the set of media assets. For example, the systems and methods may determine that the set of media assets are related to a play-off competition where a participant is eliminated from the play-off competition when the participant loses any two games of the competition. The systems and methods implementing the novel technique may query real-time data for results of the games, and determine that the participant's losses preclude the participant from winning the competition or advancing to a next round/phase, even though the participant may play more games in the current round/phase. Consequently, methods and systems implementing the novel technique may cancel scheduled recordings for subsequent instances of media assets of the set of media assets because the participant of interest no longer has a meaningful role in the competition. The systems and methods may be implemented via an interactive media guidance application running on a user device, a remote server, or another suitable device. The interactive media guidance application may be implemented partially on multiple devices such that some portions of the interactive media guidance application are executed on one device while other portions of the interactive media guidance application are executed on another device.

The systems and methods described herein may be useful in cases where updates to media guidance data occur at a slower rate than real-time events, which may impact whether participants from a first event participate in a second event. For example, a sports competition may commence and conclude within a same calendar day, with multiple rounds of the competition scheduled for delivery at various times within the calendar day (e.g., 8:00 AM, 12 PM, 5 PM). However, media guidance data may be updated once daily or at lesser frequency (e.g., on a weekly basis), at an interval that is longer than the time span of the competition. Accordingly, it would not be possible to determine whether a participant of interest to a user advances to subsequent rounds of the competition based on information from the media guidance data that updates too slowly to provide up-to-date information. The systems and methods described herein can determine a competition rule (e.g., a tournament rule) for the competition from the media guidance data. The systems and methods can then retrieve real-time data about the competition rounds (e.g., from internet data sources such as RSS feeds, social media sources, etc.), and apply the competition result to the competition rule in order to determine whether the participant has qualified for a subsequent round of competition. For example, the systems and methods may determine that a tennis competition has a best-of three matches competition rule, where a participant qualifies for a subsequent round by winning at least two of three matches within a round. Based on the determination, the systems and methods can update a list of scheduled recordings. For example, the systems and methods can add a media asset corresponding to a subsequent competition round to the list of scheduled recordings for a user.

The systems and methods disclosed herein differ from other systems and methods that may condition the recording of media assets based on data sources other than media guidance data. The systems and methods disclosed herein facilitate a determination of whether a participant of interest may appear in a subsequent round of a competition based on a competition rule for the competition, and a result of the competition. This determination that utilizes the competition rule and the result of the competition contrasts with systems that condition recording of media assets only on a notification from other data sources that affirmatively indicates that a participant will or will not appear in an upcoming media asset.

The systems and methods described herein may be useful in cases where a competition spans a duration of days, weeks, or months. The systems and methods may be useful in cases where the competition follows a deterministic competition rule over that duration. In these cases, where the competition follows a deterministic rule, an outcome of the competition can be determined with certainty based on whether a certain condition has been met. For example, the competition may follow a triple elimination round rule where a participant is eliminated from the competition based on losing any three games within a round of the competition. For example, the competition may follow a consecutive triple elimination match rule where a participant is eliminated from the competition based on losing three consecutive matches within a round. The systems and methods may modify a list of scheduled recordings based on the determination of the certain outcome. For example, if a participant of interest is eliminated from a competition, the systems and methods may cancel scheduled recordings for subsequent instances of media assets of the set of media assets related to the competition. For example, if a participant of interest qualifies for a subsequent round of a competition, the systems and methods may add to a scheduled recording list a subsequent instance of a media asset in which the participant is expected to appear.

The systems and methods may be useful in cases where the competition follows a probabilistic competition rule. In these cases, where the competition follows a probabilistic rule, a likelihood of an outcome of the competition can be determined based on analysis for multiple independent factors. The systems and methods may determine a likelihood of the result that varies as portions of the competition take place. For example, in the case of season qualifications for a basketball competition, a probabilistic rule may be that each of twenty teams plays nineteen matches (e.g., each against other teams), and the top eight teams ranked by total numbers of winning matches advances to a tournament. The systems and methods may iteratively update a likelihood that a team of interest may qualify for a tournament. The systems and methods may condition recording of instances of media assets of the set of media assets related to the competition based on whether the likelihood of the team of interest qualifying for the tournament exceeds a threshold. For example, the systems and methods may determine that the likelihood of the team qualifying for the tournament after ten of nineteen matches of the season is greater than 60%. Based on this determination, the systems and methods may update a list of scheduled recordings to add subsequent instances of the media assets related to the competition.

In addition to the aforementioned examples, a competition rule may provide for repechage or consolation matches. For example, a competition rule may specify that the bottom-ranked two teams may participate in a consolation match. The systems and methods may determine that a team is eliminated from a tournament because a ranking of the team does not exceed a threshold. The systems and methods may also determine that the team is one of two bottom-ranked teams and is thus qualified to participate in a consolation match. The systems and methods may add the instance of the consolation match to a list of scheduled recordings or remove such an instance if the media guidance system automatically added the same instance based on the participant being in the instance.

In some aspects, systems and methods are provided for scheduling recordings for a plurality of instances of a set of media assets (e.g., related to a same competition). A system may receive a user command to schedule for recording a plurality of instances of a set of media assets. For example, the system may receive a user command to schedule for recording all NFL football games that include a specific team of interest during a football season. The system may generate a list of scheduled recordings for the set of media assets. For example, the system may retrieve media guidance data and analyze the media guidance data to determine broadcast times and sources for instances of football games and add them to a list of scheduled recordings. The system may determine a competition rule for the set of media assets. For example, the system may determine the type of sport based on metadata included in retrieved media guidance data, or based on information included in the user command. The system may also determine whether the request corresponds to season games or a playoff tournament. The system may determine that the set of media assets are related to season games for NFL football, and that a competition rule for the season games indicates that the top eight teams will advanced to a tournament.

The system may determine a competition result for at least one instance of the plurality of instances. For example, the system may determine that the team of interest has won a game broadcast on a certain day by parsing data streams of NFL results for that day. The system may estimate a rank of the participant (e.g., the team of interest) of the at least one instance. For example, the system may estimate a rank of the participant by determining a fraction of games won by the team compared to a total number of scheduled games for the team during the season. The system may modify the list of scheduled recordings for the set of media assets based on the estimated rank. For example, the system may remove subsequent instances of the set of media assets based on determining that the estimated rank does not exceed a threshold. For example, the system may add subsequent instances of the set of media assets based on determining that the estimated rank does exceed the threshold.

In some aspects, systems and methods are provided for scheduling for recording a plurality of instances of a set of media assets based on detailed information for the set of media assets. A system may receive a user command to schedule for recording a plurality of instances of a set of media assets. For example, the system may receive a user command to schedule for recording all games of an NBA basketball tournament in which a specific team of interest is a participant. The system may retrieve detailed information about the set of media assets. For example, the system may retrieve the detailed information from media guidance data that includes scheduled broadcast times and sources for video broadcasts of the games. For example, the system may retrieve the detailed information from other data sources such as Internet data feeds. The system may generate a list of scheduled recordings for the set of media assets. For example, the system may generate the list of scheduled recordings based on broadcast times for instances (e.g., video broadcasts of the games) of the set of media assets determined from the retrieved detailed information about the set of media assets.

The system may determine a competition rule and a set of inputs of the competition rule based on the detailed information that was previously retrieved. For example, the system may determine based on media guidance data that the competition relates to a tournament at the conclusion of a season, instead of regular season games, and that the competition relates to basketball. For example, the system may determine the tournament is a double elimination tournament based on determining that the competition is for a basketball tournament. For example, the system may determine that a set of inputs for the competition rule includes a number of times that a team of interest has lost a game. The system may retrieve result information about at least one instance of the plurality of instances. For example, the system may retrieve information from Internet data sources (e.g., RSS feeds, news sources, social media sources, etc.) that include a score and indication of a winner of a game. The system may determine a competition result from the result information. For example, the system may determine based on a score extracted from a news feed that the team of interest has lost a game.

The system may apply the competition result to the set of inputs of the competition rule to estimate a rank of the participant of the at least one instance. For example, the system may determine that the team of interest has lost one game in the tournament and input that count of one loss to the double elimination competition rule. For example, the system may determine that the team of interest has not yet been eliminated from the competition because the double elimination rule has not yet been satisfied. For example, the system may determine that an eliminated team has a lowest rank while a non-eliminated team has a non-lowest rank. For example, the system may estimate the rank of the team of interest by comparing a fraction of the number of games won from a total number of games played by each team. The system may sort the teams by the respective fraction and estimate the rank order.

The system may determine whether the estimated rank exceeds a threshold. For example, the system may determine that the team has a rank of 3, which exceeds a threshold rank of 4. The system may modify the list of scheduled recordings for the set of media assets based on determining whether the estimated rank exceeds the threshold. For example, the system may add a subsequent instance of the set of media assets (e.g., a subsequent game), based on determining that the estimated rank of the team exceeds the threshold because the team of interest will qualify for the subsequent game based on the rank. For example, the system may remove from the list of scheduled recordings a set of instances corresponding to a team of interest, based on determining that a rank of the team of interest does not exceed a threshold (e.g., the rank of the team may be 0 when the team has been eliminated based on the competition rule, and therefore the team is not expected to further appear in the subsequent instances.).

In some embodiments, the set of media assets are broadcast within a day. For example, a set of media assets related to a swimming competition may be scheduled to take place within a day, shorter than an interval at which the system may receive updated media guidance data. In some embodiments, the system adds to the list of scheduled recording each instance of the plurality of instances of the set of media assets, subsequent to receiving the user command to schedule for recording the plurality of instances of the media assets, and prior to modifying the list of scheduled recordings. The modifying of the scheduled recordings may further include removing a subsequent instance of the plurality of instances of the set of media assets based on determining that the estimated rank does not exceed the threshold. For example, the system may determine all scheduled broadcast times for games related to a basketball tournament from retrieved detailed information from media guidance data or other data sources. The system may schedule a recording for each of the games by adding an entry for each of the games to the list of scheduled recordings. This way, each game in the tournament is initially scheduled for recording. For example, the system may modify the list of scheduled recordings by removing subsequent games, for example, after determining that an estimated rank for a basketball team of interest does not exceed a threshold. The system may modify the list of scheduled recordings to remove the subsequent games because the basketball team of interest may not participate in the subsequent games based on its rank that does not exceed the threshold.

In some embodiments, the system modifies the list of scheduled recordings by adding a subsequent instance of the set of media assets to the list of scheduled recordings based on determining that the estimated rank exceeds the threshold. For example, the system may generate a list of scheduled recordings for the set of media assets that is initially empty, or includes a scheduled recording for a first basketball game in which a team of interest is scheduled to participate. The system may subsequently estimate a rank of the participant based on a result of the first basketball game, and determine that the estimated rank exceeds a threshold (e.g., indicating that the team of interest is qualified to participate in a subsequent game in a tournament). For example, the system may add the subsequent basketball game to the list of scheduled recordings based on determining that the estimated rank exceeds a threshold (e.g., indicating that the team of interest is qualified to participate in a subsequent game in the tournament).

In some embodiments, the competition rule includes a deterministic rule, and the system may apply the competition result to estimate the rank by determining a change in the rank of the participant. For example, the deterministic rule of the competition rule may enable a determination of an outcome of the competition with certainty based on whether a certain condition has been met based on a portion of the competition that has taken place. For example, the deterministic rule may be a best-of-three games rule, where a participant advances to a subsequent round of competition by winning a simple majority of three games within a round of the competition. For example, the system may determine that a basketball team has won two games, based on a score of a current game, and score information about a prior game in which the basketball team played, and determine that the deterministic rule has been satisfied. The system may then determine that the rank of the participant who won the game has increased relative to the rank of the participant who lost the game.

In some embodiments, the system may determine the change in the rank of the participant by determining that participant has lost a number of matches that exceeds a second threshold, and determine that the estimated rank does not exceed the threshold. For example, the deterministic rule may be a double elimination rule where a basketball team that loses any two matches within a round is eliminated from the competition. For example, the system may determine that a basketball team of interest has lost a number matches that is greater than two matches, and consequently the system may determine that the rank of the participant has decreased (e.g., from a rank of 3 to a rank of 5) and may determine that the basketball team of interest has been eliminated from the game. The system may then determine that the estimated rank (e.g., rank of 5) does not exceed the threshold of (e.g., rank of 4). For example, based on determining that the estimated rank does not exceed the threshold, the system may subsequently modify the list of scheduled recordings to remove subsequent games or matches in which the team of interest does not participate because it has been eliminated from the competition.

In some embodiments, the system may determine the change in rank of the participant by determining that the participant has won a number of matches that exceeds at least half of a total number of expected matches, and then determine that the estimated rank exceeds the threshold. For example, the deterministic rule may be the best-of-three games rule, where the participant advances to a subsequent round of competition by winning a simple majority of three games within a round of the competition. For example, the system may determine that a basketball team of interest has won at least two of three games, and may determine that the rank of the basketball team has increased from a rank of 3 to a rank of 2. The system may determine that the rank of 2 exceeds the threshold rank of 4. The system may subsequently modify the scheduled list of recordings to add one or more subsequent games in the next round of competition in which the basketball team of interest has qualified to participate.

In some embodiments, the system may determine that a decrease in the rank of the participant falls below a second threshold and, based on the determining that the decrease in the rank of the participant falls below the second threshold, determine that the participant is eligible to compete in subsequent instances of the plurality of instances of the set of media assets. For example, the competition rule may be a double elimination rule, and the system may determine that the basketball team has lost a number of matches that is greater than two matches. The system may determine that the rank of the participant has decreased (e.g., from a rank of 3 to a rank of 6) and falls below a second threshold (e.g., that the change in the rank has decreased by more than two ranks). The system may determine that the basketball team of interest, while not qualified to advance to a subsequent round of the tournament, may qualify for a repechage or consolation match against other teams whose ranks have fallen below a second threshold. For example, the system may modify the list of scheduled recordings to include the scheduled repechage or consolation match.

In some embodiments, the system may determine whether a participant's appearance in one or more subsequent instances of the plurality of instances of the set of media assets will have a meaningful effect on the final outcome of the competition. For example, the competition may be a season qualification for a playoff tournament where 30 of 40 games have been played. Control circuitry may determine that a participant is unable to qualify among a set of top eight teams in a best case scenario where the participant wins all subsequent games. Alternatively, or in addition, control circuitry may determine that the participant is unlikely to qualify among the set of top eight teams, even in view of the expected performance of the other teams in the competition, which may be determined by calculating a moving average prediction of each team's scores. Based on one or more, or a combination of these determinations, control circuitry may determine that the participant's appearance in subsequent instances of the plurality of instances of the set of media assets will not have a meaningful effect on the final outcome of the competition and modify the list of recordings for the set of media assets to remove a subsequent instance in which the participant is scheduled or expected to appear. Alternatively, control circuitry may determine that the participant's appearance in one or more subsequent instances of the plurality of instances of the set of media assets will have a meaningful effect on the final outcome of the competition and modify the list of recordings for the set of media assets to add a subsequent instance in which the participant is scheduled or expected to appear.

In some embodiments, the competition rule includes a probabilistic rule and the system applies the competition result to estimate the rank by determining a likelihood of a change in the rank of the participant. For example, in season qualifications for a basketball competition, the probabilistic rule may be that each of twenty teams plays that each of twenty teams plays nineteen matches (e.g., each against other teams), and the top eight teams ranked by total numbers of winning matches advances to a tournament. The system may iteratively update a likelihood that a team of interest may qualify for the tournament. The system may determine that there is a 70% chance that the team of interest will have a rank that increases to be one of the top eight ranked teams.

In some embodiments, the system may determine the likelihood of a change in the rank of the participant by determining the likelihood of a decrease in the rank of the participant and, prior to modifying the list of scheduled recordings, generating for display a prompt requesting that a user confirm a removal of subsequent instances of the set of media assets from the list of scheduled recordings. For example, the system may determine that there is a 90% chance that the rank of the participant falls out of the top eight qualifying teams. The system may prompt the user on whether to continue recording subsequent games of the basketball competition or to cancel recordings of the competition, even where the team of interest may be scheduled to participant because the outcome of the games will not change the likelihood that the team of interest will qualify for a final tournament.

It should be noted that the systems, methods, apparatuses, and/or aspects described above may be applied to, or used in accordance with, other systems, methods, apparatuses, and/or aspects described in this disclosure.

### Brief Description of the Drawings

The above and other objects and advantages of the disclosure will be apparent upon consideration of the following detailed description, taken in conjunction with the accompanying drawings, in which like reference characters refer to like parts throughout, and in which:
FIG. 1 shows an illustrative example of a display screen generated by a media guidance application in accordance with some embodiments of the disclosure;
FIG. 2 shows another illustrative example of a display screen generated by a media guidance application in accordance with some embodiments of the disclosure;
FIG 3 shows yet another illustrative example of a display screen generated by a media guidance application in accordance with some embodiments of the disclosure;
FIG 4 is a block diagram of an illustrative user equipment device in accordance with some embodiments of the disclosure;
FIG. 5 is a block diagram of an illustrative media system in accordance with some embodiments of the disclosure;
FIG. 6 is a flowchart of an illustrative process for scheduling recordings of a plurality of instances of a set of media assets with some embodiments of the disclosure;
FIG. 7 is a flowchart of an illustrative process for scheduling recordings of a plurality of instances of a set of media assets with some embodiments of the disclosure;
FIG. 8 is a flowchart of a detailed illustrative process for scheduling recordings of a plurality of instances of a set of media assets with some embodiments of the disclosure; and
FIG. 9 is a flowchart of an illustrative process for determining a set of competition rules for a set of media assets in accordance with some embodiments of the disclosure.

### Detailed Description

Systems and methods are described to address shortcomings in conventional media systems via a novel technique to update a list of scheduled recordings for a plurality of instances in a set of media assets related to a competition based on a competition rule and competition result for an instance of the media asset. The systems and methods may be implemented via an interactive media guidance application running on a user device, a remote server, or another suitable device. The interactive media guidance application may be implemented partially on multiple devices such that some portions of the interactive media guidance application are executed on one device while other portions of the interactive media guidance application are executed on another device.

The amount of content available to users in any given content delivery system can be substantial. Consequently, many users desire a form of media guidance through an interface that allows users to efficiently navigate content selections and easily identify content that they may desire. An application that provides such guidance is referred to herein as an interactive media guidance application or, sometimes, a media guidance application or a guidance application.

Interactive media guidance applications may take various forms depending on the content for which they provide guidance. One typical type of media guidance application is an interactive television program guide. Interactive television program guides (sometimes referred to as electronic program guides) are well-known guidance applications that, among other things, allow users to navigate among and locate many types of content or media assets. Interactive media guidance applications may generate graphical user interface screens that enable a user to navigate among, locate and select content. As referred to herein, the terms "media asset" and "content" should be understood to mean an electronically consumable user asset, such as television programming, as well as pay-per-view programs, on-demand programs (as in video-on-demand (VOD) systems), Internet content (e.g., streaming content, downloadable content, Webcasts, etc.), video clips, audio, content information, pictures, rotating images, documents, playlists, websites, articles, books, electronic books, blogs, chat sessions, social media, applications, games, and/or any other media or multimedia and/or combination of the same. Guidance applications also allow users to navigate among and locate content. As referred to herein, the term "multimedia" should be understood to mean content that utilizes at least two different content forms described above, for example, text, audio, images, video, or interactivity content forms. Content may be recorded, played, displayed or accessed by user equipment devices, but can also be part of a live performance.

The media guidance application and/or any instructions for performing any of the embodiments discussed herein may be encoded on computer readable media. Computer readable media includes any media capable of storing data. The computer readable media may be transitory, including, but not limited to, propagating electrical or electromagnetic signals, or may be non-transitory including, but not limited to, volatile and non-volatile computer memory or storage devices such as a hard disk, floppy disk, USB drive, DVD, CD, media cards, register memory, processor caches, Random Access Memory ("RAM"), etc.

With the advent of the Internet, mobile computing, and high-speed wireless networks, users are accessing media on user equipment devices on which they traditionally did not. As referred to herein, the phrase "user equipment device," "user equipment," "user device," "electronic device," "electronic equipment," "media equipment device," or "media device" should be understood to mean any device for accessing the content described above, such as a television, a Smart TV, a set-top box, an integrated receiver decoder (IRD) for handling satellite television, a digital storage device, a digital media receiver (DMR), a digital media adapter (DMA), a streaming media device, a DVD player, a DVD recorder, a connected DVD, a local media server, a BLU-RAY player, a BLU-RAY recorder, a personal computer (PC), a laptop computer, a tablet computer, a WebTV box, a personal computer television (PC/TV), a PC media server, a PC media center, a hand-held computer, a stationary telephone, a personal digital assistant (PDA), a mobile telephone, a portable video player, a portable music player, a portable gaming machine, a smart phone, or any other television equipment, computing equipment, or wireless device, and/or combination of the same. In some embodiments, the user equipment device may have a front facing screen and a rear facing screen, multiple front screens, or multiple angled screens. In some embodiments, the user equipment device may have a front facing camera and/or a rear facing camera. On these user equipment devices, users may be able to navigate among and locate the same content available through a television. Consequently, media guidance may be available on these devices, as well. The guidance provided may be for content available only through a television, for content available only through one or more of other types of user equipment devices, or for content available both through a television and one or more of the other types of user equipment devices. The media guidance applications may be provided as on-line applications (i.e., provided on a web-site), or as stand-alone applications or clients on user equipment devices. Various devices and platforms that may implement media guidance applications are described in more detail below.

One of the functions of the media guidance application is to provide media guidance data to users. As referred to herein, the phrase "media guidance data" or "guidance data" should be understood to mean any data related to content or data used in operating the guidance application. For example, the guidance data may include program information, guidance application settings, user preferences, user profile information, media listings, media-related information (e.g., broadcast times, broadcast channels, titles, descriptions, ratings information (e.g., parental control ratings, critic's ratings, etc.), genre or category information, actor information, logo data for broadcasters' or providers' logos, etc.), media format (e.g., standard definition, high definition, 3D, etc.), on-demand information, blogs, websites, and any other type of guidance data that is helpful for a user to navigate among and locate desired content selections.

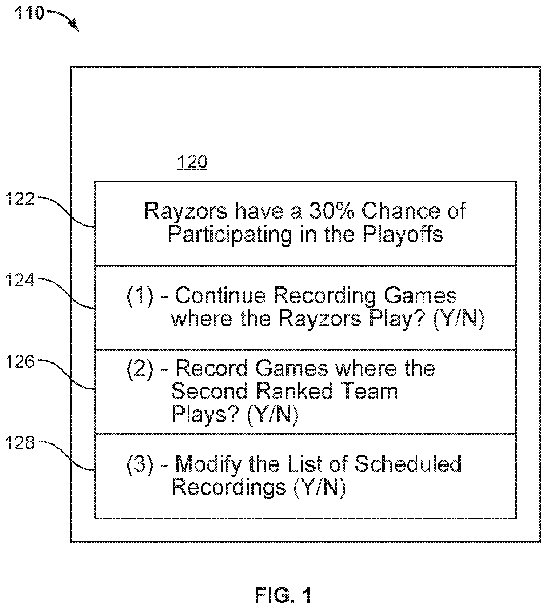

FIG. 1 shows an illustrative example of a display screen 100 generated by the interactive media guidance application. In the example, the interactive media guidance application has determined that a team "Rayzors" participating in a regular season competition has a 30% chance of participating in playoffs matches (e.g., as part of a final tournament at the end of the season). The Rayzors may be a team of interest to a user. For example, the user may have requested to record instances of the set of media assets in which the Rayzors participate. For example, the interactive media guidance application may have determined that the regular season competition follows a probabilistic rule as part of a competition rule where a top eight teams from all teams are qualified to participate in the final tournament, and also determined, based on competition results of prior matches involving the Rayzors, that the team only has the 30% chance or likelihood of participating in the final tournament (e.g., because there is a 30% likelihood that the team will advance to the final tournament relative to other tournaments). As referred to herein, the phrase competition rule should be understood to mean a set of conditions and relations that is used to determine or estimate whether a participant advances from a first portion of a competition to a second portion of the competition. As referred to herein, the phrase probabilistic rule should be understood to mean a set of conditions and relations that is used to estimate a likelihood of whether a participant advances from a first portion of a competition to a second portion of the competition. As referred to herein, the phrase competition result should be understood to mean an outcome of a portion of a competition (e.g., a game, match, round, any other suitable portion or any combination thereof). The interactive media guidance application may have determined that the 30% likelihood does not exceed a threshold (e.g., a 70% threshold), and based on that determination, generated for display an overlay 120. In some embodiments, the threshold may have been set by a user manually, or may have been set by the interactive media guidance application based on adaptively determining a level of a user's interest in a team based on performance of the team during a season competition.

The overlay 120 may include a first portion 122 providing a notification of one or more selectable options (e.g., selectable options 124, 126, 128). The first selectable option 124 may request that a user confirm whether to continue recording games where the Rayzors are scheduled to play. Based on receiving a user selection of the first selectable media option, and an affirmative response (e.g., selection of "Y"), the media guidance application may continue recording season games in which the Rayzors are expected to participate. Based on receiving a negative response (e.g., selection of "N"), the media guidance application may stop recording season games in which the Rayzors are expected to participate, for example, by removing subsequent instances including the Rayzors as participants from the list of scheduled recordings. This confirmation enables the user to confirm whether to continue recording subsequent games in which the Rayzors are scheduled to play, even though the subsequent games likely will not affect whether the Rayzors can participate in a final tournament. For example, this confirmation enables a user to selectively cancel recordings for instances of the set of media assets in order to conserve storage space on a recording device (e.g., local recording device at a user equipment device within the user's home, or at a remote recording device at a remote server).

The second selectable option 126 may enable the user to instruct the media guidance application to record games where a second ranked team plays. For example, based on receiving a user selection of the second selectable option, the media guidance application may cancel subsequent recordings for instances of the set of media assets in which the Rayzors are a participant, by removing those instances from the list of scheduled recordings. For example, the media guidance application may add to the list of scheduled recordings subsequent instances in which the second ranked team is expected to participate in replacement, or in addition to the instances in which the Rayzors are expected to participate. In some embodiments, the second selectable option may enable the user to instruct the media guidance application to record games that include another participant instead of the second ranked team. For example, the media guidance application may determine based on a user profile created by the user that the user has a preference hierarchy for a plurality of teams, of which the Rayzors has a highest preference priority. The media guidance application may select the team with the next highest preference priority from the preference hierarchy to include in the second selectable option 126.

The third selectable option 128 may enable the user to modify the list of scheduled recordings. For example, based on receiving a user selection of the third selectable option, the media guidance application may generate for display a menu that enables the user to manually select instances for removal from the list of scheduled recordings. Alternatively, or in addition (e.g., as part of the same display), the media guidance application may generate for display a menu that enables the user to manually add subsequent instances from the set of media assets to the list of recordings. Alternatively, or in addition (e.g., as part of the same display), the media guidance application may generate for display a menu that enables the user to input another participant of interest for subsequent recordings. Based on receiving the input of another participant, the media guidance application may query media guidance data or other data (e.g., from Internet data sources such as RSS feeds, social media sources and real-time data sources), determine media assets in which the another participant is expected to participate, and add those media assets to the list of scheduled recordings. Examples of scheduling of media assets based on data sources is described from example in Lee et al., U.S. Patent Publication No. 2011/0078174, filed September 30, 2009, which is hereby incorporated by reference herein in its entirety. Examples of scheduling of media assets based on media guidance data is described from example in Ellis et al., U.S. Patent No. 8,281,341, issued October 2, 2012, which is hereby incorporated by reference herein in its entirety.

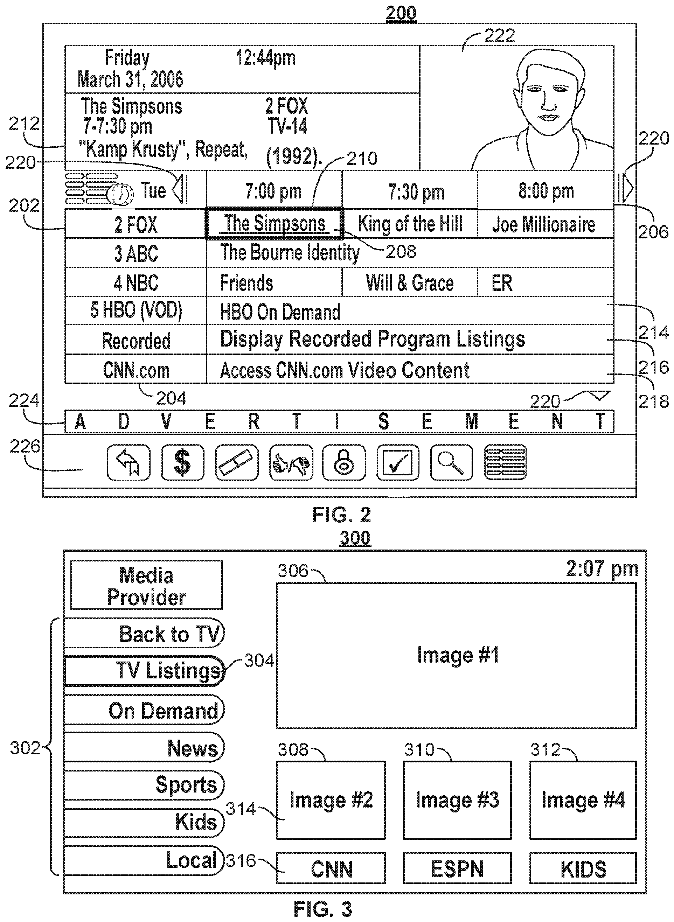

FIGS. 2-3 show illustrative display screens that may be used to provide media guidance data. The display screens shown in FIGS. 2-3 may be implemented on any suitable user equipment device or platform. While the displays of FIGS. 2-3 are illustrated as full screen displays, they may also be fully or partially overlaid over content being displayed. A user may indicate a desire to access content information by selecting a selectable option provided in a display screen (e.g., a menu option, a listings option, an icon, a hyperlink, etc.) or pressing a dedicated button (e.g., a GUIDE button) on a remote control or other user input interface or device. In response to the user's indication, the media guidance application may provide a display screen with media guidance data organized in one of several ways, such as by time and channel in a grid, by time, by channel, by source, by content type, by category (e.g., movies, sports, news, children, or other categories of programming), or other predefined, user-defined, or other organization criteria.

FIG. 2 shows illustrative grid of a program listings display 200 arranged by time and channel that also enables access to different types of content in a single display. Display 200 may include grid 202 with: (1) a column of channel/content type identifiers 204, where each channel/content type identifier (which is a cell in the column) identifies a different channel or content type available; and (2) a row of time identifiers 206, where each time identifier (which is a cell in the row) identifies a time block of programming. Grid 202 also includes cells of program listings, such as program listing 208, where each listing provides the title of the program provided on the listing's associated channel and time. With a user input device, a user can select program listings by moving highlight region 210. Information relating to the program listing selected by highlight region 210 may be provided in program information region 212. Region 212 may include, for example, the program title, the program description, the time the program is provided (if applicable), the channel the program is on (if applicable), the program's rating, and other desired information.

In addition to providing access to linear programming (e.g., content that is scheduled to be transmitted to a plurality of user equipment devices at a predetermined time and is provided according to a schedule), the media guidance application also provides access to non-linear programming (e.g., content accessible to a user equipment device at any time and is not provided according to a schedule). Non-linear programming may include content from different content sources including on-demand content (e.g., VOD), Internet content (e.g., streaming media, downloadable media, etc.), locally stored content (e.g., content stored on any user equipment device described above or other storage device), or other time-independent content. On-demand content may include movies or any other content provided by a particular content provider (e.g., HBO On Demand providing "The Sopranos" and "Curb Your Enthusiasm"). HBO ON DEMAND is a service mark owned by Time Warner Company L.P. et al. and THE SOPRANOS and CURB YOUR ENTHUSIASM are trademarks owned by the Home Box Office, Inc. Internet content may include web events, such as a chat session or Webcast, or content available on-demand as streaming content or downloadable content through an Internet web site or other Internet access (e.g. FTP).

Grid 202 may provide media guidance data for non-linear programming including on-demand listing 214, recorded content listing 216, and Internet content listing 218. A display combining media guidance data for content from different types of content sources is sometimes referred to as a "mixed-media" display. Various permutations of the types of media guidance data that may be displayed that are different than display 200 may be based on user selection or guidance application definition (e.g., a display of only recorded and broadcast listings, only on-demand and broadcast listings, etc.). As illustrated, listings 214, 216, and 218 are shown as spanning the entire time block displayed in grid 202 to indicate that selection of these listings may provide access to a display dedicated to on-demand listings, recorded listings, or Internet listings, respectively. In some embodiments, listings for these content types may be included directly in grid 202. Additional media guidance data may be displayed in response to the user selecting one of the navigational icons 220. (Pressing an arrow key on a user input device may affect the display in a similar manner as selecting navigational icons 220.)

Display 200 may also include video region 222, and options region 226. Video region 222 may allow the user to view and/or preview programs that are currently available, will be available, or were available to the user. The content of video region 222 may correspond to, or be independent from, one of the listings displayed in grid 202. In some embodiments, display 200 may include a selectable option (not shown) to access a display of a list of scheduled recordings. For example, the media guidance application may generate for display the list of scheduled recordings that is similar to a display generated for display in response to a selection of third selectable option 128 of FIG. 1. In some embodiments, the display 110 of FIG. 1 may be generated for display over grid display 200 upon invoking the display 200, instead of over a video of a media asset. Grid displays including a video region are sometimes referred to as picture-in-guide (PIG) displays. PIG displays and their functionalities are described in greater detail in Satterfield et al. U.S. Patent No. 6,564,378, issued May 13, 2003 and Yuen et al. U.S. Patent No. 6,239,794, issued May 29, 2001. PIG displays may be included in other media guidance application display screens of the embodiments described herein.

Options region 226 may allow the user to access different types of content, media guidance application displays, and/or media guidance application features. Options region 226 may be part of display 200 (and other display screens described herein), or may be invoked by a user by selecting an on-screen option or pressing a dedicated or assignable button on a user input device. The selectable options within options region 226 may concern features related to program listings in grid 202 or may include options available from a main menu display. Features related to program listings may include searching for other air times or ways of receiving a program, recording a program, enabling series recording of a program, setting program and/or channel as a favorite, purchasing a program, or other features. Options available from a main menu display may include search options, VOD options, parental control options, Internet options, cloud-based options, device synchronization options, second screen device options, options to access various types of media guidance data displays, options to subscribe to a premium service, options to edit a user's profile, options to access a browse overlay, or other options.

The media guidance application may be personalized based on a user's preferences. A personalized media guidance application allows a user to customize displays and features to create a personalized "experience" with the media guidance application. This personalized experience may be created by allowing a user to input these customizations and/or by the media guidance application monitoring user activity to determine various user preferences. Users may access their personalized guidance application by logging in or otherwise identifying themselves to the guidance application. Customization of the media guidance application may be made in accordance with a user profile. The customizations may include varying presentation schemes (e.g., color scheme of displays, font size of text, etc.), aspects of content listings displayed (e.g., only HDTV or only 3D programming, user-specified broadcast channels based on favorite channel selections, re-ordering the display of channels, recommended content, etc.), desired recording features (e.g., recording or series recordings for particular users, recording quality, etc.), parental control settings, customized presentation of Internet content (e.g., presentation of social media content, e-mail, electronically delivered articles, etc.) and other desired customizations.

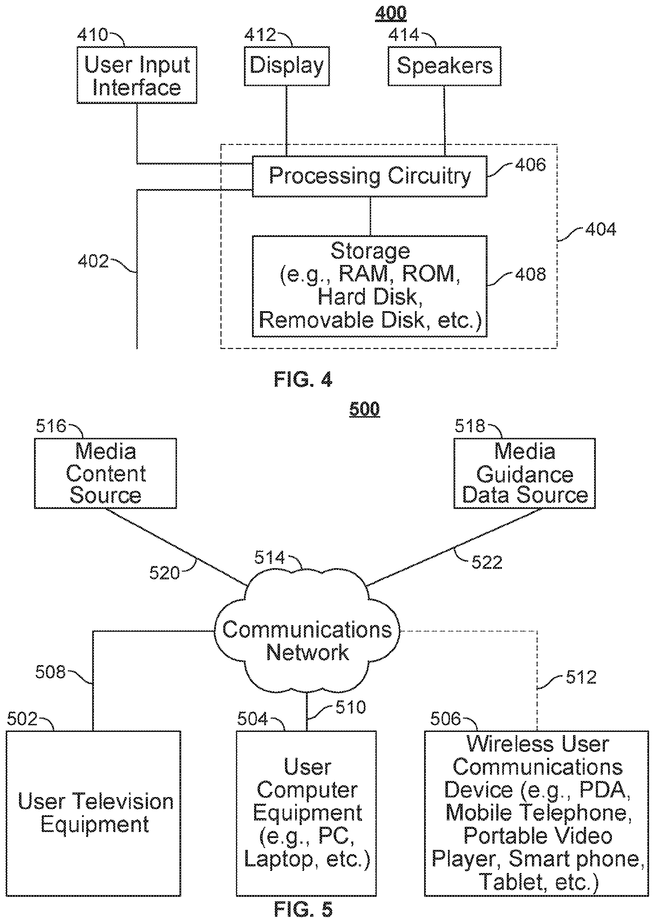

The media guidance application may allow a user to provide user profile information or may automatically compile user profile information. The media guidance application may, for example, monitor the content the user accesses and/or other interactions the user may have with the guidance application. For example, the media guidance application may determine through monitoring content the user access, the preference hierarchy of teams that was discussed in reference to the selection of second selectable option 126 in FIG. 1. Additionally, the media guidance application may obtain all or part of other user profiles that are related to a particular user (e.g., from other web sites on the Internet the user accesses, such as www.allrovi.com, from other media guidance applications the user accesses, from other interactive applications the user accesses, from another user equipment device of the user, etc.), and/or obtain information about the user from other sources that the media guidance application may access. As a result, a user can be provided with a unified guidance application experience across the user's different user equipment devices. This type of user experience is described in greater detail below in connection with FIG. 5. Additional personalized media guidance application features are described in greater detail in Ellis et al., U.S. Patent Application Publication No. 2005/0251827, filed July 11, 2005, Boyer et al., U.S. Patent No. 7,165,098, issued January 16, 2007, and Ellis etal., U.S. Patent Application Publication No. 2002/0174430, filed February 21,.

Another display arrangement for providing media guidance is shown in FIG. 3. Video mosaic display 300 includes selectable options 302 for content information organized based on content type, genre, and/or other organization criteria. In display 300, television listings option 304 is selected, thus providing listings 306, 308, 310, and 312 as broadcast program listings. In some embodiments, the display 110 of FIG. 1 may be generated for display over grid display 300 upon invoking the display 300, instead of over a video of a media asset. In display 300 the listings may provide graphical images including cover art, still images from the content, video clip previews, live video from the content, or other types of content that indicate to a user the content being described by the media guidance data in the listing. Each of the graphical listings may also be accompanied by text to provide further information about the content associated with the listing. For example, listing 308 may include more than one portion, including media portion 314 and text portion 316. Media portion 314 and/or text portion 316 may be selectable to view content in full-screen or to view information related to the content displayed in media portion 314 (e.g., to view listings for the channel that the video is displayed on).

The listings in display 300 are of different sizes (i.e., listing 306 is larger than listings 308, 310, and 312), but if desired, all the listings may be the same size. Listings may be of different sizes or graphically accentuated to indicate degrees of interest to the user or to emphasize certain content, as desired by the content provider or based on user preferences. Various systems and methods for graphically accentuating content listings are discussed in, for example, Yates, U.S. Patent Application Publication No. 2010/0153885, filed November 12, 2009.

Users may access content and the media guidance application (and its display screens described above and below) from one or more of their user equipment devices. FIG. 4 shows a generalized embodiment of illustrative user equipment device 400. More specific implementations of user equipment devices are discussed below in connection with FIG. 5. User equipment device 400 may receive content and data via input/output (hereinafter "I/O") path 402. I/O path 402 may provide content (e.g., broadcast programming, on-demand programming, Internet content, content available over a local area network (LAN) or wide area network (WAN), and/or other content) and data to control circuitry 404, which includes processing circuitry 406 and storage 408. Control circuitry 404 may be used to send and receive commands, requests, and other suitable data using I/O path 402. I/O path 402 may connect control circuitry 404 (and specifically processing circuitry 406) to one or more communications paths (described below). I/O functions may be provided by one or more of these communications paths, but are shown as a single path in FIG. 4 to avoid overcomplicating the drawing.

Control circuitry 404 may be based on any suitable processing circuitry such as processing circuitry 406. As referred to herein, processing circuitry should be understood to mean circuitry based on one or more microprocessors, microcontrollers, digital signal processors, programmable logic devices, field-programmable gate arrays (FPGAs), application-specific integrated circuits (ASICs), etc., and may include a multi-core processor (e.g., dual-core, quad-core, hexa-core, or any suitable number of cores) or supercomputer. In some embodiments, processing circuitry may be distributed across multiple separate processors or processing units, for example, multiple of the same type of processing units (e.g., two Intel Core i7 processors) or multiple different processors (e.g., an Intel Core i5 processor and an Intel Core i7 processor). In some embodiments, control circuitry 404 executes instructions for a media guidance application stored in memory (i.e., storage 408). Specifically, control circuitry 404 may be instructed by the media guidance application to perform the functions discussed above and below. For example, the media guidance application may provide instructions to control circuitry 404 to generate the media guidance displays. In some implementations, any action performed by control circuitry 404 may be based on instructions received from the media guidance application.

In client-server based embodiments, control circuitry 404 may include communications circuitry suitable for communicating with a guidance application server or other networks or servers. The instructions for carrying out the above mentioned functionality may be stored on the guidance application server. Communications circuitry may include a cable modem, an integrated services digital network (ISDN) modem, a digital subscriber line (DSL) modem, a telephone modem, Ethernet card, or a wireless modem for communications with other equipment, or any other suitable communications circuitry. Such communications may involve the Internet or any other suitable communications networks or paths (which is described in more detail in connection with FIG. 5). In addition, communications circuitry may include circuitry that enables peer-to-peer communication of user equipment devices, or communication of user equipment devices in locations remote from each other (described in more detail below).

Memory may be an electronic storage device provided as storage 408 that is part of control circuitry 404. As referred to herein, the phrase "electronic storage device" or "storage device" should be understood to mean any device for storing electronic data, computer software, or firmware, such as random-access memory, read-only memory, hard drives, optical drives, digital video disc (DVD) recorders, compact disc (CD) recorders, BLU-RAY disc (BD) recorders, BLU-RAY 3D disc recorders, digital video recorders (DVR, sometimes called a personal video recorder, or PVR), solid state devices, quantum storage devices, gaming consoles, gaming media, or any other suitable fixed or removable storage devices, and/or any combination of the same. Storage 408 may be used to store various types of content described herein as well as media guidance data described above. Nonvolatile memory may also be used (e.g., to launch a boot-up routine and other instructions). Cloud-based storage, described in relation to FIG. 5, may be used to supplement storage 408 or instead of storage 408.

Control circuitry 404 may include video generating circuitry and tuning circuitry, such as one or more analog tuners, one or more MPEG-2 decoders or other digital decoding circuitry, high-definition tuners, or any other suitable tuning or video circuits or combinations of such circuits. Encoding circuitry (e.g., for converting over-the-air, analog, or digital signals to MPEG signals for storage) may also be provided. Control circuitry 404 may also include scaler circuitry for upconverting and downconverting content into the preferred output format of the user equipment 400. Circuitry 404 may also include digital-to-analog converter circuitry and analog-to-digital converter circuitry for converting between digital and analog signals. The tuning and encoding circuitry may be used by the user equipment device to receive and to display, to play, or to record content. The tuning and encoding circuitry may also be used to receive guidance data. The circuitry described herein, including for example, the tuning, video generating, encoding, decoding, encrypting, decrypting, scaler, and analog/digital circuitry, may be implemented using software running on one or more general purpose or specialized processors. Multiple tuners may be provided to handle simultaneous tuning functions (e.g., watch and record functions, picture-in-picture (PIP) functions, multiple-tuner recording, etc.). If storage 408 is provided as a separate device from user equipment 400, the tuning and encoding circuitry (including multiple tuners) may be associated with storage 408.

A user may send instructions to control circuitry 404 using user input interface 410. User input interface 410 may be any suitable user interface, such as a remote control, mouse, trackball, keypad, keyboard, touch screen, touchpad, stylus input, joystick, voice recognition interface, or other user input interfaces. Display 412 may be provided as a stand-alone device or integrated with other elements of user equipment device 400. For example, display 412 may be a touchscreen or touch-sensitive display. In such circumstances, user input interface 410 may be integrated with or combined with display 412. Display 412 may be one or more of a monitor, a television, a liquid crystal display (LCD) for a mobile device, amorphous silicon display, low temperature poly silicon display, electronic ink display, electrophoretic display, active matrix display, electro-wetting display, electrofluidic display, cathode ray tube display, light-emitting diode display, electroluminescent display, plasma display panel, high-performance addressing display, thin-film transistor display, organic light-emitting diode display, surface-conduction electron-emitter display (SED), laser television, carbon nanotubes, quantum dot display, interferometric modulator display, or any other suitable equipment for displaying visual images. In some embodiments, display 412 may be HDTV-capable. In some embodiments, display 412 may be a 3D display, and the interactive media guidance application and any suitable content may be displayed in 3D. A video card or graphics card may generate the output to the display 412. The video card may offer various functions such as accelerated rendering of 3D scenes and 2D graphics, MPEG-2/MPEG-4 decoding, TV output, or the ability to connect multiple monitors. The video card may be any processing circuitry described above in relation to control circuitry 404. The video card may be integrated with the control circuitry 404. Speakers 414 may be provided as integrated with other elements of user equipment device 400 or may be stand-alone units. The audio component of videos and other content displayed on display 412 may be played through speakers 414. In some embodiments, the audio may be distributed to a receiver (not shown), which processes and outputs the audio via speakers 414.

The guidance application may be implemented using any suitable architecture. For example, it may be a stand-alone application wholly-implemented on user equipment device 400. In such an approach, instructions of the application are stored locally (e.g., in storage 408), and data for use by the application is downloaded on a periodic basis (e.g., from an out-of-band feed, from an Internet resource, or using another suitable approach). Control circuitry 404 may retrieve instructions of the application from storage 408 and process the instructions to generate any of the displays discussed herein. Based on the processed instructions, control circuitry 404 may determine what action to perform when input is received from input interface 410. For example, movement of a cursor on a display up/down may be indicated by the processed instructions when input interface 410 indicates that an up/down button was selected.

In some embodiments, the media guidance application is a client-server based application. Data for use by a thick or thin client implemented on user equipment device 400 is retrieved on-demand by issuing requests to a server remote to the user equipment device 400. In one example of a client-server based guidance application, control circuitry 404 runs a web browser that interprets web pages provided by a remote server. For example, the remote server may store the instructions for the application in a storage device. The remote server may process the stored instructions using circuitry (e.g., control circuitry 404) and generate the displays discussed above and below. The client device may receive the displays generated by the remote server and may display the content of the displays locally on equipment device 400. This way, the processing of the instructions is performed remotely by the server while the resulting displays are provided locally on equipment device 400. Equipment device 400 may receive inputs from the user via input interface 410 and transmit those inputs to the remote server for processing and generating the corresponding displays. For example, equipment device 400 may transmit a communication to the remote server indicating that an up/down button was selected via input interface 410. The remote server may process instructions in accordance with that input and generate a display of the application corresponding to the input (e.g., a display that moves a cursor up/down). The generated display is then transmitted to equipment device 400 for presentation to the user.

In some embodiments, the media guidance application is downloaded and interpreted or otherwise run by an interpreter or virtual machine (run by control circuitry 404). In some embodiments, the guidance application may be encoded in the ETV Binary Interchange Format (EBIF), received by control circuitry 404 as part of a suitable feed, and interpreted by a user agent running on control circuitry 404. For example, the guidance application may be an EBIF application. In some embodiments, the guidance application may be defined by a series of JAVA-based files that are received and run by a local virtual machine or other suitable middleware executed by control circuitry 404. In some of such embodiments (e.g., those employing MPEG-2 or other digital media encoding schemes), the guidance application may be, for example, encoded and transmitted in an MPEG-2 object carousel with the MPEG audio and video packets of a program.

User equipment device 400 of FIG. 4 can be implemented in system 500 of FIG. 5 as user television equipment 502, user computer equipment 504, wireless user communications device 506, or any other type of user equipment suitable for accessing content, such as a non-portable gaming machine. For simplicity, these devices may be referred to herein collectively as user equipment or user equipment devices, and may be substantially similar to user equipment devices described above. User equipment devices, on which a media guidance application may be implemented, may function as a standalone device or may be part of a network of devices. Various network configurations of devices may be implemented and are discussed in more detail below.

A user equipment device utilizing at least some of the system features described above in connection with FIG. 4 may not be classified solely as user television equipment 502, user computer equipment 504, or a wireless user communications device 506. For example, user television equipment 502 may, like some user computer equipment 504, be Internet-enabled allowing for access to Internet content, while user computer equipment 504 may, like some television equipment 502, include a tuner allowing for access to television programming. The media guidance application may have the same layout on various different types of user equipment or may be tailored to the display capabilities of the user equipment. For example, on user computer equipment 504, the guidance application may be provided as a web site accessed by a web browser. In another example, the guidance application may be scaled down for wireless user communications devices 506.

In system 500, there is typically more than one of each type of user equipment device but only one of each is shown in FIG. 5 to avoid overcomplicating the drawing. In addition, each user may utilize more than one type of user equipment device and also more than one of each type of user equipment device.

In some embodiments, a user equipment device (e.g., user television equipment 502, user computer equipment 504, wireless user communications device 506) may be referred to as a "second screen device." For example, a second screen device may supplement content presented on a first user equipment device. The content presented on the second screen device may be any suitable content that supplements the content presented on the first device. In some embodiments, the second screen device provides an interface for adjusting settings and display preferences of the first device. In some embodiments, the second screen device is configured for interacting with other second screen devices or for interacting with a social network. The second screen device can be located in the same room as the first device, a different room from the first device but in the same house or building, or in a different building from the first device.

The user may also set various settings to maintain consistent media guidance application settings across in-home devices and remote devices. Settings include those described herein, as well as channel and program favorites, programming preferences that the guidance application utilizes to make programming recommendations, display preferences, and other desirable guidance settings. For example, if a user sets a channel as a favorite on, for example, the web site www.allrovi.com on their personal computer at their office, the same channel would appear as a favorite on the user's in-home devices (e.g., user television equipment and user computer equipment) as well as the user's mobile devices, if desired. Therefore, changes made on one user equipment device can change the guidance experience on another user equipment device, regardless of whether they are the same or a different type of user equipment device. In addition, the changes made may be based on settings input by a user, as well as user activity monitored by the guidance application.

The user equipment devices may be coupled to communications network 514. Namely, user television equipment 502, user computer equipment 504, and wireless user communications device 506 are coupled to communications network 514 via communications paths 508, 510, and 512, respectively. Communications network 514 may be one or more networks including the Internet, a mobile phone network, mobile voice or data network (e.g., a 4G or LTE network), cable network, public switched telephone network, or other types of communications network or combinations of communications networks. Paths 508, 510, and 512 may separately or together include one or more communications paths, such as, a satellite path, a fiber-optic path, a cable path, a path that supports Internet communications (e.g., IPTV), free-space connections (e.g., for broadcast or other wireless signals), or any other suitable wired or wireless communications path or combination of such paths. Path 512 is drawn with dotted lines to indicate that in the exemplary embodiment shown in FIG. 5 it is a wireless path and paths 508 and 510 are drawn as solid lines to indicate they are wired paths (although these paths may be wireless paths, if desired). Communications with the user equipment devices may be provided by one or more of these communications paths, but are shown as a single path in FIG. 5 to avoid overcomplicating the drawing.

Although communications paths are not drawn between user equipment devices, these devices may communicate directly with each other via communication paths, such as those described above in connection with paths 508, 510, and 512, as well as other short-range point-to-point communication paths, such as USB cables, IEEE 1394 cables, wireless paths (e.g., Bluetooth, infrared, IEEE 802-11x, etc.), or other short-range communication via wired or wireless paths. BLUETOOTH is a certification mark owned by Bluetooth SIG, INC. The user equipment devices may also communicate with each other directly through an indirect path via communications network 514.

System 500 includes content source 516 and media guidance data source 518 coupled to communications network 514 via communication paths 520 and 522, respectively. Paths 520 and 522 may include any of the communication paths described above in connection with paths 508, 510, and 512. Communications with the content source 516 and media guidance data source 518 may be exchanged over one or more communications paths, but are shown as a single path in FIG. 5 to avoid overcomplicating the drawing. In addition, there may be more than one of each of content source 516 and media guidance data source 518, but only one of each is shown in FIG. 5 to avoid overcomplicating the drawing. (The different types of each of these sources are discussed below.) If desired, content source 516 and media guidance data source 518 may be integrated as one source device. Although communications between sources 516 and 518 with user equipment devices 502, 504, and 506 are shown as through communications network 514, in some embodiments, sources 516 and 518 may communicate directly with user equipment devices 502, 504, and 506 via communication paths (not shown) such as those described above in connection with paths 508, 510, and 512.

Content source 516 may include one or more types of content distribution equipment including a television distribution facility, cable system headend, satellite distribution facility, programming sources (e.g., television broadcasters, such as NBC, ABC, HBO, etc.), intermediate distribution facilities and/or servers, Internet providers, on-demand media servers, and other content providers. NBC is a trademark owned by the National Broadcasting Company, Inc., ABC is a trademark owned by the American Broadcasting Company, Inc., and HBO is a trademark owned by the Home Box Office, Inc. Content source 516 may be the originator of content (e.g., a television broadcaster, a Webcast provider, etc.) or may not be the originator of content (e.g., an on-demand content provider, an Internet provider of content of broadcast programs for downloading, etc.). Content source 516 may include cable sources, satellite providers, on-demand providers, Internet providers, over-the-top content providers, or other providers of content. Content source 516 may also include a remote media server used to store different types of content (including video content selected by a user), in a location remote from any of the user equipment devices. Systems and methods for remote storage of content, and providing remotely stored content to user equipment are discussed in greater detail in connection with Ellis et al., U.S. Patent No. 7,761,892, issued July 20, 2010.

Media guidance data source 518 may provide media guidance data, such as the media guidance data described above. Media guidance data may be provided to the user equipment devices using any suitable approach. In some embodiments, the guidance application may be a stand-alone interactive television program guide that receives program guide data via a data feed (e.g., a continuous feed or trickle feed). Program schedule data and other guidance data may be provided to the user equipment on a television channel sideband, using an in-band digital signal, using an out-of-band digital signal, or by any other suitable data transmission technique. Program schedule data and other media guidance data may be provided to user equipment on multiple analog or digital television channels.

In some embodiments, guidance data from media guidance data source 518 may be provided to users' equipment using a client-server approach. For example, a user equipment device may pull media guidance data from a server, or a server may push media guidance data to a user equipment device. In some embodiments, a guidance application client residing on the user's equipment may initiate sessions with source 518 to obtain guidance data when needed, e.g., when the guidance data is out of date or when the user equipment device receives a request from the user to receive data. Media guidance may be provided to the user equipment with any suitable frequency (e.g., continuously, daily, a user-specified period of time, a system-specified period of time, in response to a request from user equipment, etc.). Media guidance data source 518 may provide user equipment devices 502, 504, and 506 the media guidance application itself or software updates for the media guidance application.

In some embodiments, the media guidance data may include viewer data. For example, the viewer data may include current and/or historical user activity information (e.g., what content the user typically watches, what times of day the user watches content, whether the user interacts with a social network, at what times the user interacts with a social network to post information, what types of content the user typically watches (e.g., pay TV or free TV), mood, brain activity information, etc.). The media guidance data may also include subscription data. For example, the subscription data may identify to which sources or services a given user subscribes and/or to which sources or services the given user has previously subscribed but later terminated access (e.g., whether the user subscribes to premium channels, whether the user has added a premium level of services, whether the user has increased Internet speed). In some embodiments, the viewer data and/or the subscription data may identify patterns of a given user for a period of more than one year. The media guidance data may include a model (e.g., a survivor model) used for generating a score that indicates a likelihood a given user will terminate access to a service/source. For example, the media guidance application may process the viewer data with the subscription data using the model to generate a value or score that indicates a likelihood of whether the given user will terminate access to a particular service or source. In particular, a higher score may indicate a higher level of confidence that the user will terminate access to a particular service or source. Based on the score, the media guidance application may generate promotions that entice the user to keep the particular service or source indicated by the score as one to which the user will likely terminate access.

Media guidance applications may be, for example, stand-alone applications implemented on user equipment devices. For example, the media guidance application may be implemented as software or a set of executable instructions which may be stored in storage 408, and executed by control circuitry 404 of a user equipment device 400. In some embodiments, media guidance applications may be client-server applications where only a client application resides on the user equipment device, and server application resides on a remote server. For example, media guidance applications may be implemented partially as a client application on control circuitry 404 of user equipment device 400 and partially on a remote server as a server application (e.g., media guidance data source 518) running on control circuitry of the remote server. When executed by control circuitry of the remote server (such as media guidance data source 518), the media guidance application may instruct the control circuitry to generate the guidance application displays and transmit the generated displays to the user equipment devices. The server application may instruct the control circuitry of the media guidance data source 518 to transmit data for storage on the user equipment. The client application may instruct control circuitry of the receiving user equipment to generate the guidance application displays.

Content and/or media guidance data delivered to user equipment devices 502, 504, and 506 may be over-the-top (OTT) content. OTT content delivery allows Internet-enabled user devices, including any user equipment device described above, to receive content that is transferred over the Internet, including any content described above, in addition to content received over cable or satellite connections. OTT content is delivered via an Internet connection provided by an Internet service provider (ISP), but a third party distributes the content. The ISP may not be responsible for the viewing abilities, copyrights, or redistribution of the content, and may only transfer IP packets provided by the OTT content provider. Examples of OTT content providers include YOUTUBE, NETFLIX, and HULU, which provide audio and video via IP packets. Youtube is a trademark owned by Google Inc., Netflix is a trademark owned by Netflix Inc., and Hulu is a trademark owned by Hulu, LLC. OTT content providers may additionally or alternatively provide media guidance data described above. In addition to content and/or media guidance data, providers of OTT content can distribute media guidance applications (e.g., web-based applications or cloud-based applications), or the content can be displayed by media guidance applications stored on the user equipment device. In some embodiments, the OTT sources may include Internet data sources such as RSS feeds, social media sources, news sources, or other sources that are updated at a more frequent interval than conventional media guidance data. For example, the OTT sources may include a database from which blobs of data (e.g., javascript object notation (JSON) data, or any other suitable data format) for sporting events may be queried and retrieved by user equipment devices 402, 404, and 406.

Media guidance system 500 is intended to illustrate a number of approaches, or network configurations, by which user equipment devices and sources of content and guidance data may communicate with each other for the purpose of accessing content and providing media guidance. The embodiments described herein may be applied in any one or a subset of these approaches, or in a system employing other approaches for delivering content and providing media guidance. The following four approaches provide specific illustrations of the generalized example of FIG. 5.

In one approach, user equipment devices may communicate with each other within a home network. User equipment devices can communicate with each other directly via short-range point-to-point communication schemes described above, via indirect paths through a hub or other similar device provided on a home network, or via communications network 514. Each of the multiple individuals in a single home may operate different user equipment devices on the home network. As a result, it may be desirable for various media guidance information or settings to be communicated between the different user equipment devices. For example, it may be desirable for users to maintain consistent media guidance application settings on different user equipment devices within a home network, as described in greater detail in Ellis et al., U.S. Patent Publication No. 2005/0251827, filed July 11, 2005. Different types of user equipment devices in a home network may also communicate with each other to transmit content. For example, a user may transmit content from user computer equipment to a portable video player or portable music player.

In a second approach, users may have multiple types of user equipment by which they access content and obtain media guidance. For example, some users may have home networks that are accessed by in-home and mobile devices. Users may control in-home devices via a media guidance application implemented on a remote device. For example, users may access an online media guidance application on a website via a personal computer at their office, or a mobile device such as a PDA or web-enabled mobile telephone. The user may set various settings (e.g., recordings, reminders, or other settings) on the online guidance application to control the user's in-home equipment. The online guide may control the user's equipment directly, or by communicating with a media guidance application on the user's in-home equipment. Various systems and methods for user equipment devices communicating, where the user equipment devices are in locations remote from each other, is discussed in, for example, Ellis et al., U.S. Patent No. 8,046,801, issued October 25, 2011

In a third approach, users of user equipment devices inside and outside a home can use their media guidance application to communicate directly with content source 516 to access content. Specifically, within a home, users of user television equipment 502 and user computer equipment 504 may access the media guidance application to navigate among and locate desirable content. Users may also access the media guidance application outside of the home using wireless user communications devices 506 to navigate among and locate desirable content.

In a fourth approach, user equipment devices may operate in a cloud computing environment to access cloud services. In a cloud computing environment, various types of computing services for content sharing, storage or distribution (e.g., video sharing sites or social networking sites) are provided by a collection of network-accessible computing and storage resources, referred to as "the cloud." For example, the cloud can include a collection of server computing devices, which may be located centrally or at distributed locations, that provide cloud-based services to various types of users and devices connected via a network such as the Internet via communications network 514. These cloud resources may include one or more content sources 516 and one or more media guidance data sources 518. In addition or in the alternative, the remote computing sites may include other user equipment devices, such as user television equipment 502, user computer equipment 504, and wireless user communications device 506. For example, the other user equipment devices may provide access to a stored copy of a video or a streamed video. In such embodiments, user equipment devices may operate in a peer-to-peer manner without communicating with a central server.

The cloud provides access to services, such as content storage, content sharing, or social networking services, among other examples, as well as access to any content described above, for user equipment devices. Services can be provided in the cloud through cloud computing service providers, or through other providers of online services. For example, the cloud-based services can include a content storage service, a content sharing site, a social networking site, or other services via which user-sourced content is distributed for viewing by others on connected devices. These cloud-based services may allow a user equipment device to store content to the cloud and to receive content from the cloud rather than storing content locally and accessing locally-stored content.

A user may use various content capture devices, such as camcorders, digital cameras with video mode, audio recorders, mobile phones, and handheld computing devices, to record content. The user can upload content to a content storage service on the cloud either directly, for example, from user computer equipment 504 or wireless user communications device 506 having content capture feature. Alternatively, the user can first transfer the content to a user equipment device, such as user computer equipment 504. The user equipment device storing the content uploads the content to the cloud using a data transmission service on communications network 514. In some embodiments, the user equipment device itself is a cloud resource, and other user equipment devices can access the content directly from the user equipment device on which the user stored the content.

Cloud resources may be accessed by a user equipment device using, for example, a web browser, a media guidance application, a desktop application, a mobile application, and/or any combination of access applications of the same. The user equipment device may be a cloud client that relies on cloud computing for application delivery, or the user equipment device may have some functionality without access to cloud resources. For example, some applications running on the user equipment device may be cloud applications, i.e., applications delivered as a service over the Internet, while other applications may be stored and run on the user equipment device. In some embodiments, a user device may receive content from multiple cloud resources simultaneously. For example, a user device can stream audio from one cloud resource while downloading content from a second cloud resource. Or a user device can download content from multiple cloud resources for more efficient downloading. In some embodiments, user equipment devices can use cloud resources for processing operations such as the processing operations performed by processing circuitry described in relation to FIG. 4. In some embodiments, the cloud resources may include data sources such as RSS feeds, social media sources, news sources, or other sources that are updated at a more frequent interval than conventional media guidance data. For example, the cloud resources may provide data (e.g., javascript object notation (JSON) data, or any other suitable data format) for sporting events and may be queried and retrieved by user equipment devices 402, 404, and 406.

As referred herein, the term "in response to" refers to initiated as a result of. For example, a first action being performed in response to a second action may include interstitial steps between the first action and the second action. As referred herein, the term "directly in response to" refers to caused by. For example, a first action being performed directly in response to a second action may not include interstitial steps between the first action and the second action.

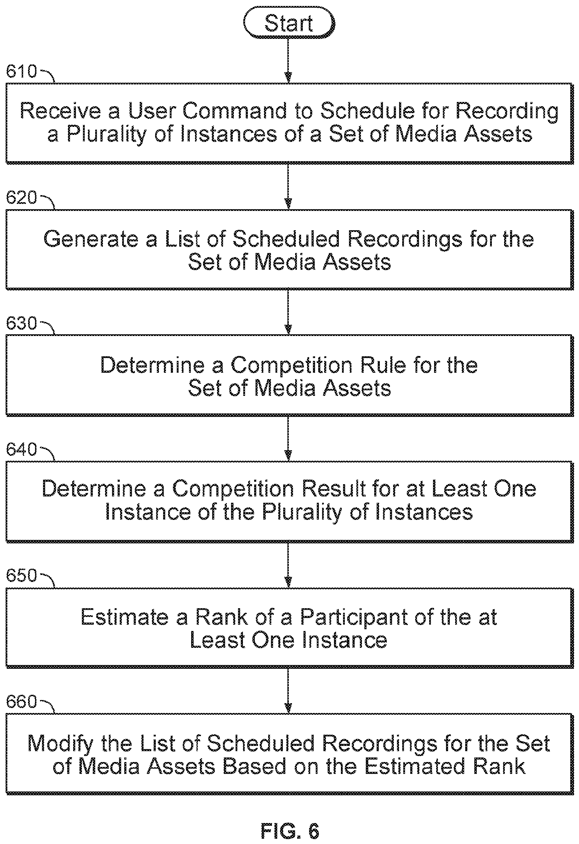

FIGS. 6-9 present processes for control circuitry (e.g., control circuitry 404) to generate and update a list of scheduled recordings based on a competition rule and competition results for instances of a set of a media assets related to a competition in accordance with some embodiments of the disclosure. In some embodiments this algorithm may be encoded on to non-transitory storage medium (e.g., storage device 408) as a set of instructions to be decoded and executed by processing circuitry (e.g., processing circuitry 406). Processing circuitry may in turn provide instructions to other sub-circuits contained within control circuitry 404, such as the tuning, video generating, encoding, decoding, encrypting, decrypting, scaling, analog/digital conversion circuitry, and the like.

The flowchart in FIG. 6 describes a process implemented on control circuitry (e.g., control circuitry 404) to generate and modify a list of scheduled recordings for a set of media assets based on an estimated rank of a participant of an instance of the set of media assets in accordance with some embodiments of the disclosure.

At step 610, control circuitry 404 receives a user command to schedule for recording a plurality of instances of a set of media assets. In some embodiments, this may be done either directly or indirectly in response to a user action or input (e.g., from signals received by control circuitry 404 or user input interface 410). For example, the process may begin directly in response to control circuitry 404 receiving signals from user input interface 410, or control circuitry 404 may prompt the user to confirm their input using a display (e.g., by generating a prompt to be displayed on display 412) prior to running the algorithm. In some embodiments, control circuitry may receive as part of the user command a specified participant (e.g., the team "Rayzors") in a competition related to the set of media assets. In addition, control circuitry may receive as part of the user command an indicator of the competition (e.g., a name of the competition such as NBA basketball season games, Olympic swimming, World of War Craft Tournament, etc.). The part of the user command may be entered as a natural language expression, boolean expression, or other suitable expression (e.g., constructed from a selection of a plurality of menu options).

At step 620, control circuitry 404 proceeds to generate a list of scheduled recordings for the set of media assets. In some embodiments, control circuitry 404 may retrieve media guidance data (e.g., from media guidance data source 518 or other suitable source), and then parse the media guidance data for key words or metadata relating to the competition. For example, the control circuitry 404 may parse the media guidance data for instances of games that are part of a competition (e.g., NBA season games), in which the specified participant (e.g., the team Rayzors) is expected to participate. In some embodiments, control circuitry 404 may add all instances related to the competition and/or the participant to the list of scheduled recordings. In these embodiments, control circuitry may update the list of scheduled recordings by removing instances of scheduled recordings based on determining whether the participant is expected to participate in those instances, or whether the participant is expected to meet some other condition such as qualifying for post-season games). In some embodiments, control circuitry may add a first upcoming instance relating to the participant and the competition. In these embodiments, control circuitry may update the list of scheduled recordings by adding instances of scheduled recordings. In some embodiments, the value may be stored as part of a larger data structure, and control circuitry 404 may retrieve the value by executing appropriate accessor methods to retrieve the value from the larger data structure.

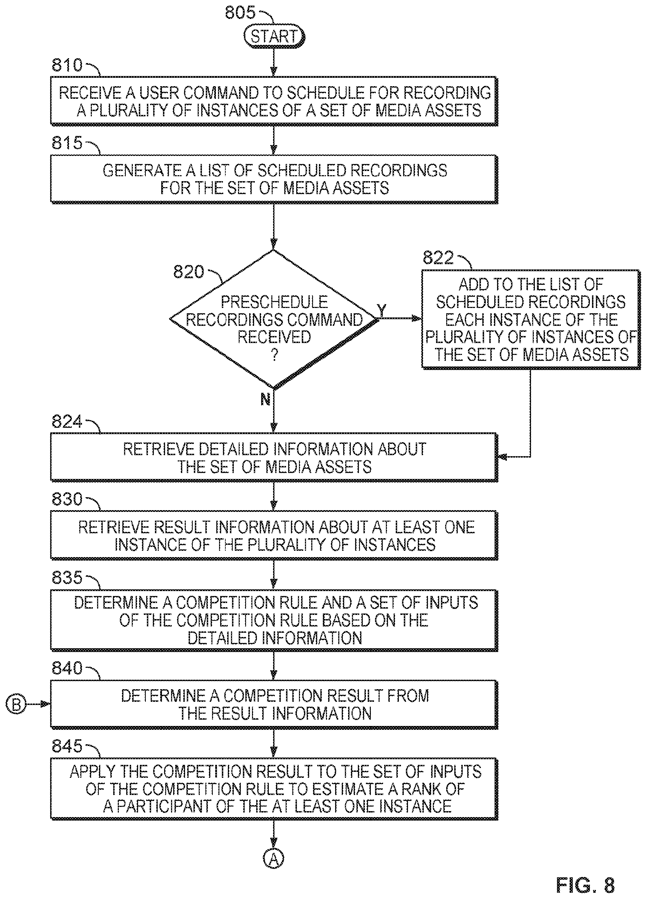

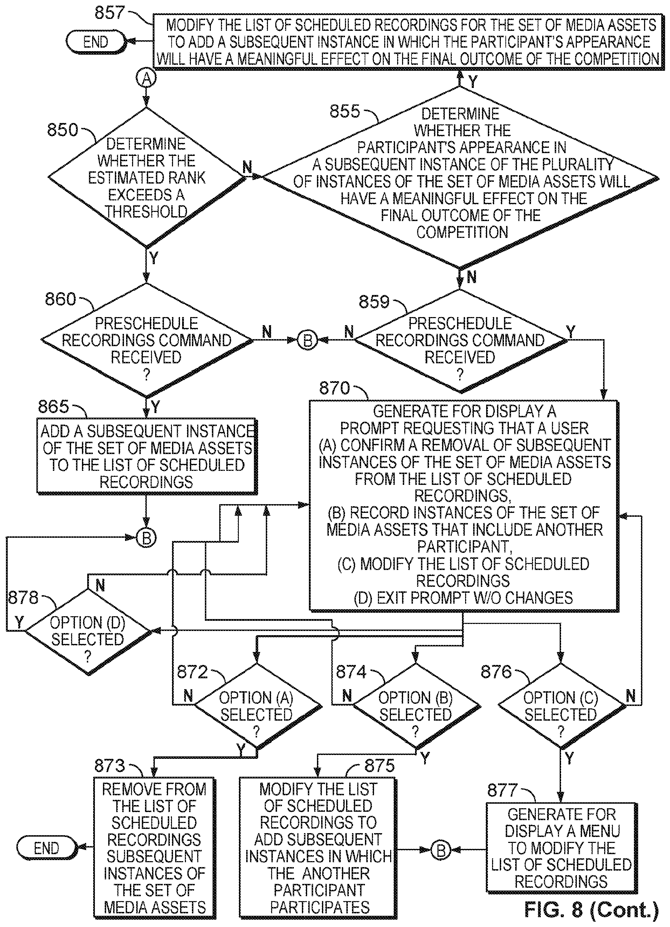

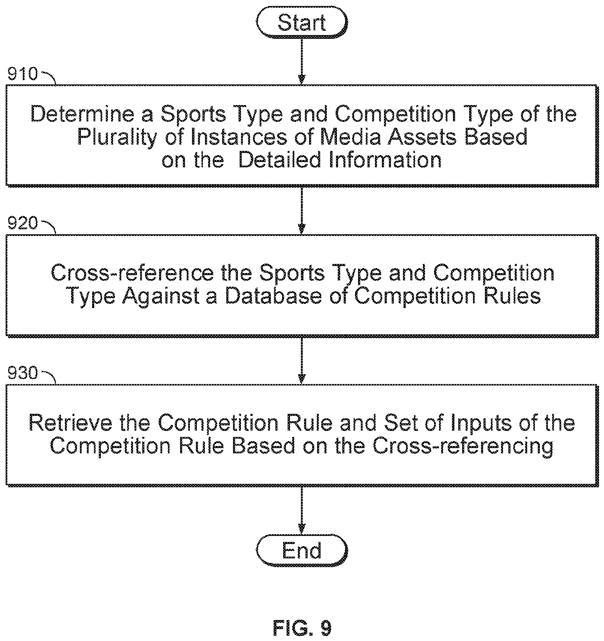

At step 630, control circuitry 404 proceeds to determine a competition rule for the set of media assets. Details for determination of the competition rule is described further below in reference to FIGS. 8 and 9. For example, control circuitry 404 may cross-reference an indicator of the competition with a database in order to determine the type of rule. For example, control circuitry 404 may determine information from media guidance data for the set of media assets. For example, control circuitry may determine that the set of media assets is related to season games to quality for the playoffs, or that the set of media assets relates to a playoff tournament) and cross-reference the other information with the database. For example, control circuitry 404 may determine that for season games, a competition rule specifies that the top eight teams advance to the playoffs based on a rank calculated as a fraction of games won to total games played.

At step 640, control circuitry 404 determines a competition result for at least one instance of the plurality of instances. For example, control circuitry 404 may determine, based on data retrieved from data sources (e.g., Internet data sources), that the Rayzors team has just won an instance of the set of media assets that was being currently recorded. For example, control circuitry 404 may issue a query to a database such as an Internet database of sports scores to retrieve the result information (e.g., a sports score) from which the competition result (e.g., which team won) is determined. For example, control circuitry 404 may issue a query to a social media service to retrieve result information in the form of social media posts (e.g., from a social media site or blog for the participant of interest, or for a news service covering the outcome of a game). In some embodiments, as discussed further below in reference to FIG. 8, control circuitry may perform step 640 while a game is in progress, instead of at the conclusion of a game. In these embodiments, control circuitry may determine competition results in intervals. In some embodiments, control circuitry 404 may apply the competition results at intervals during a progression to a competition rule that includes a probabilistic rule to estimate a rank of a team. For example, control circuitry may determine that a team that has a consistently high lead from the start of a game has a higher rank than a team that starts with a lower point lead at the beginning of the game, but ends the game with the same point lead.

At step 650, control circuitry 404 estimates a rank of the participant of the at least one instance. For example, control circuitry may determine that participant has won the instances of competition based on the determining in step 640. Control circuitry may determine a score for the participant (e.g., the team Rayzors or other participant of interest specified in step 610) as a fraction of games won by the participant to all games that have been played. Control circuitry may compare the score of the participant (e.g., the Rayzors team) to all other participants of the competition to determine a current rank of the participant (e.g., the Rayzors). In some embodiments, control circuitry may estimate the rank of the participant (e.g., the Rayzors) by determining a likelihood of the participant qualifying for a post-season tournament. Control circuitry may determine this estimation based on analyzing trends (e.g., a moving average) of the participants' relative scores across portions of the competition, and project a final ranking.

In some embodiments, control circuitry 404 may determine a competition result (e.g., in step 64) based on professional commentary and/or social media commentary. For example, control circuitry 404 may retrieve a news article (e.g., including text of the news article or images), and analyze the text and images to determine a competition result (e.g., that a participant of interest did win a competition or did not win a competition). In some embodiments, control circuitry 404 may estimate a rank based on professional commentary and/or social media commentary. For example, control circuitry 404 may perform natural language processing on text of news articles, social media posts, or other data sources or audio of news broadcasts, social media posts, or other data sources to determine performance of a team. For example, control circuitry 404 may analyze the text or audio for key words such as "high performance," "unparalleled strategy" or other descriptors that indicate performance of a team. In some embodiments, control circuitry may modify a threshold based on professional commentary and/or social media commentary. For example, control circuitry 404 may perform natural language processing on text of news articles, social media posts, or other data sources or audio of news broadcasts, social media posts, or other data sources for key words such as "underdog," "big upset," or other indicators of an unexpected occurrence that might warrant lowering a threshold used to determine whether to continue recording or scheduled recording instances of a plurality of media assets in which a team plays. In some embodiments, control circuitry may use the analysis of unexpected occurrences to determine a rank of a team. For example, control circuitry 404 may determine that a rank of a team should be increased due to an unexpected high performance and point lead in competition (e.g., a final basketball tournament competition ) as compared to earlier performances (e.g., during season game play).

At step 660, control circuitry 404 modifies the list of scheduled recordings for the set of media assets based on the estimated rank. In some embodiments, control circuitry may remove subsequent instances of scheduled recording based on determining that an estimated rank has fallen below a certain threshold. For example, control circuitry may cancel subsequent instances including the Rayzors when the Rayzors' estimated rank falls below a rank required for qualification beyond season games. In some embodiments, control circuitry may add subsequent instances to the list of scheduled recordings based on determining that the estimated rank of the participant remains above a threshold. For example, the control circuitry may add a subsequent instance in which the participant is scheduled to appear if the estimated rank remains above rank 10.

It is contemplated that the descriptions of FIG. 6 may be used with any other embodiment of this disclosure. In addition, the descriptions described in relation to the algorithm of FIG. 6 may be done in alternative orders or in parallel to further the purposes of this disclosure. As a further example, in some embodiments, several steps may be evaluated in parallel, using multiple logical processor threads, or the algorithm may be enhanced by incorporating branch prediction. Furthermore, it should be noted that the process of FIG. 5 may be implemented on a combination of appropriately configured software and hardware, and that any of the devices or equipment discussed in relation to FIGS. 4-4 could be used to implement one or more portions of the process.

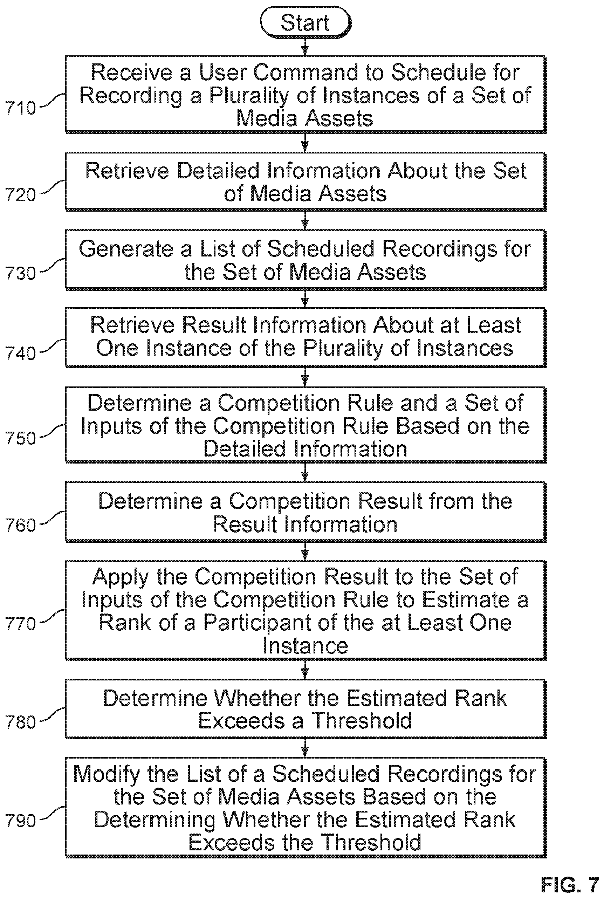

The flowchart in FIG. 7 describes a process implemented on control circuitry (e.g., control circuitry 404) to generate and modify a list of scheduled recordings for a set of media assets based on an estimated rank of a participant of an instance of the set of media assets in accordance with some embodiments of the disclosure.

At step 710, control circuitry 404 receives a user command to schedule for recording a plurality of instances of a set of media assets. In some embodiments, this may be done either directly or indirectly in response to a user action or input (e.g., from signals received by control circuitry 404 or user input interface 410). For example, the process may begin directly in response to control circuitry 404 receiving signals from user input interface 410, or control circuitry 404 may prompt the user to confirm their input using a display (e.g., by generating a prompt to be displayed on display 412) prior to running the algorithm. Step 710 may be similar to step 610 discussed above in reference to FIG. 6.

At step 720, control circuitry 404 proceeds to retrieve detailed information about the set of media assets. Control circuitry 404 may issue a query to media guidance data source 518 or other suitable data source for schedule information based on a name of a participant of interest to a user, and information about the competition, received, for example, as part of the command received in step 710. For example, control circuitry 404 may receive a user command to record all media assets for a post-season basketball tournament in which the team Rayzors will participate.

At step 730, control circuitry 404 proceeds to generate a list of scheduled recordings for the set of media assets. In some embodiments, control circuitry 404 may retrieve media guidance data (e.g., from media guidance data source 518 or other suitable source), and then parse the media guidance data for key words or metadata relating to the competition. Step 730 may be similar to step 620 of FIG. 6 discussed above. For example, control circuitry 404 may generate a list of scheduled recordings based on scheduled broadcast time for all games in the post-season basketball tournament. In some embodiments, the value may be stored as part of a larger data structure, and control circuitry 404 may retrieve the value by executing appropriate accessor methods to retrieve the value from the larger data structure.

At step 740, control circuitry 404 proceeds to retrieve result information about at least one instance of the plurality of instances. In some embodiments, control circuitry may retrieve result information for an instance either during recording of or after recording of the instance has completed. In some embodiments, control circuitry may retrieve result information from an Internet data source that provides scores for matches of a competition, or news alerts for the game. As referred to herein, the term "result information" should be understood to refer to information that includes an outcome of a game, such as news alerts, Internet postings, score tickers, or any other suitable information. For example, control circuitry may retrieve a news alert about a basketball game that has just been recorded based on the list of scheduled recordings.

At step 750, control circuitry 404 proceeds to determine a competition rule and a set of inputs of the competition rule based on the detailed information. This step is similar to step 630 of Figure 6. Details for determination of the competition rule are described further below in reference to FIGS. 8 and 9. For example, control circuitry 404 may parse media guidance data for the set of media assets to determine information about the set of media assets. For example, control circuitry 404 may determine that the set of media assets is related to a basketball post-season tournament, and that the tournament follows a double elimination rule per round, where a team loses after losing any two games within a round.

At step 760, control circuitry 404 determines a competition result from the result information. For example, control circuitry 404, in step 740, may have retrieved an online article about a basketball game that was just completed. Control circuitry 404 may parse the text of the article to determine whether a team of interest to the user (e.g., the Rayzors), won or lost the basketball game. For example, control circuitry 404 may parse the text of the article and determine that the Rayzors lost the game.

At step 770, control circuitry 404 applies the competition result to the set of inputs of the competition rule to estimate a rank of a participant of the at least one instance. For example, control circuitry may evaluate the double elimination competition rule based on the loss by the Rayzors of the basketball game. Control circuitry may estimate the rank of the Rayzors by comparing a current win-loss record compared to other teams. For example, control circuitry 404 may estimate that the Rayzors are ranked 7 out of 8 teams based on the loss.

At step 780, control circuitry 404 determines whether the estimated rank exceeds a threshold. For example, control circuitry 404 may determine that the estimated rank of 7 does not exceed a threshold rank of 4.

At step 790, control circuitry 404 modifies the list of scheduled recordings for the set of media asset-based on determining whether the estimated rank exceeds the threshold. For example, control circuitry 404, based on determining that the estimated rank does not exceed the threshold, may modify the list of scheduled recordings to remove subsequent instances of scheduled recordings for basketball games, because the scheduled recordings are likely of little interest to the user because the team of interest is unlikely to win the competition.

It is contemplated that the descriptions of FIG. 7 may be used with any other embodiment of this disclosure. In addition, the descriptions described in relation to the algorithm of FIG. 7 may be done in alternative orders or in parallel to further the purposes of this disclosure. As a further example, in some embodiments, several steps may be evaluated in parallel, using multiple logical processor threads, or the algorithm may be enhanced by incorporating branch prediction. Furthermore, it should be noted that the process of FIG. 5 may be implemented on a combination of appropriately configured software and hardware, and that any of the devices or equipment discussed in relation to FIGS. 4-4 could be used to implement one or more portions of the process.

The flowchart in FIG. 8 describes a process implemented on control circuitry (e.g., control circuitry 404) to generate and modify a list of scheduled recordings for a set of media assets based on an estimated rank of a participant of an instance of the set of media assets in accordance with some embodiments of the disclosure.

The process starts at step 805. At step 810, control circuitry 404 receives a user command to schedule for recording a plurality of instances of a set of media assets. In some embodiments, this may be done either directly or indirectly in response to a user action or input (e.g., from signals received by control circuitry 404 or user input interface 410). For example, the process may begin directly in response to control circuitry 404 receiving signals from user input interface 410, or control circuitry 404 may prompt the user to confirm her or his input using a display (e.g., by generating a prompt to be displayed on display 412) prior to running the algorithm. Step 810 may be similar to steps 710 and 610 discussed above in reference to FIG. 7 and FIG. 6, respectively. For example, control circuitry 404 may receive a user command to record all season basketball games for the team Rayzors, as long as the Rayzors are likely to qualify for a post-season tournament.

At step 815, control circuitry 404 proceeds to generate a list of scheduled recordings for the set of media assets. For example, control circuitry 404 may generate a data structure that is stored in storage 708. In some embodiments, control circuitry 404 may generate the list of scheduled recordings by allocating the data structure for the list, as discussed further below in reference to steps 820 and 822. In some embodiments, control circuitry 404 may generate the list by allocating the data structure for the list and adding entries for instances of the set of media assets indicated in step 810. In some embodiments, control circuitry 404 may add a next instance in which the participant of interest is scheduled to participate in the competition. For example, control circuitry 404 may determine a broadcast time for a next instance of a basketball game for Rayzors and add the instance to the list of scheduled recordings.

At step 820, control circuitry 404 determines whether a pre-schedule recordings command has been received. In some embodiments, the pre-schedule recordings command has been received as part of the user command received in step 810. In some embodiments, the pre-schedule recordings command may be set as part of a user profile of the user. If control circuitry determines that a pre-schedule recordings command has been received, control circuitry next proceeds to step 822; otherwise, control circuitry proceeds to step 824.

At step 822, control circuitry 404 adds to the list of scheduled recordings each instance of the plurality of instances of the set of media assets. The preschedule recording command enables adding all initially determined instances of the set of media assets to the list of scheduled recordings. For example, control circuitry may parse media guidance data to determine all scheduled broadcast times and duration for season games in the competition in which the Rayzors are scheduled to participate, and add each instance corresponding to a scheduled broadcast to the list of scheduled recordings. The prescheduled recording operation enables a user to assign recording tasks in advance, such that the user may be alerted to potential recording conflicts at a later time. With prescheduled recording, the instances for scheduled recording can be later removed from the list of scheduled recordings, based on user request, or based on determining that the participant of interest (e.g., a team) in the instances scheduled for recording is no longer likely to satisfy criteria of a competition rule (e.g., qualify for a post-seasons final tournament). Additionally, the prescheduled recordings operation may be useful in cases where a competition takes places within one day. This way, all games and/or matches of the competition can be prescheduled for recording, and a control circuitry 404 can notify a user of potential recording conflicts in advance.

For example, the competition may be a series of matches in the Olympics competition across a different or same sport, where a participant of interest is a country. For each sport, control circuitry 404 may estimate a rank of the country's athletes in the sport at least in part on the performance of the country's athletes across a plurality of sports competitions. For example, control circuitry may determine that a rank of a country's athlete in swimming is increased, based on determining that the country's athlete in water polo has been scoring highly and ranked highly. For example, control circuitry 404 may automatically, or in response to confirmation from a prompt generated for display to a user, schedule for recording instances for a first sport (e.g., swimming) based on determining that the country's performance in another related sport (e.g., water polo), or unrelated sport (e.g., equestrian) has an estimated rank that exceeds a threshold.

At step 824, control circuitry 404 retrieves detailed information about the set of media assets. Control circuitry 404 may retrieve the detailed information from media guidance data source 518, an Internet data source, or other suitable data source. For example, control circuitry 404 may issue a query to media guidance data source 518 for media guidance data about the set of media assets. Control circuitry 404 may issue the query based on the scheduled broadcast times and broadcast channels. Control circuitry 404 may parse the media guidance data for common fields, such as type of competition organization (e.g., NCAA, NBA, NHL, AFL, etc.), type of game (e.g., basketball, football, etc.), and type of competition (e.g., season qualification, tournament, etc.). For example, control circuitry 404 may issue a query to an OTT source in order to obtain detailed information about the set of media assets. Control circuitry 404 may issue a query to a news database for news articles related to the set of media assets, and parse the news articles for the detailed information.

At step 830, control circuitry 404 retrieves result information about at least one instance of the plurality of instances. Control circuitry 404 may retrieve the result information from media guidance data source 518, an Internet data source or other suitable data source. For example, control circuitry 404 may retrieve a score for a game that has recently been recorded. Upon completion of the game and/or the recording, control circuitry 404 may issue a query to the media guidance data source 518 or an Internet data source to obtain a score for the game. For example, control circuitry 404 may retrieve a news article reporting an outcome of the game from an Internet data source.

At step 835, control circuitry 404 determines a competition rule and a set of inputs of the competition rule based on the detailed information (e.g., retrieved in step 824). Control circuitry 404 may parse the detailed information retrieved in step 824 for a type of competition organization (e.g., NCAA, NBA, NHL, AFL, etc.), type of game (e.g., basketball, football, etc.), and type of competition (e.g., season qualification, tournament, etc.) related to the set of media assets. Control circuitry 404 may then cross-reference the type of game and type of competition against a database in order to determine a competition rule. For example, control circuitry 404 may determine that an NBA basketball tournament follows a deterministic rule such as a best-of-seven games competition rule, and that an NCAA basketball tournament follows a deterministic rule such as a double elimination competition rule. Details regarding different types of competition rules and determination of competition rules are discussed further below in reference to Fig. 9.

At step 840, control circuitry 404 determines a competition result from the result information (e.g., retrieved in step 830). In some embodiments, the result information may be a score of a game in which a participant of interest has played. Control circuitry 404 may retrieve the score from a media guidance data source 518 and/or Internet data source. Control circuitry may parse the score and determine a competition result (e.g., whether the participant of interest won the game). In some embodiments, the result information may be text in a news article or a social media post. Control circuitry 404 may retrieve the news article or social media post from a media guidance data source 518 and/or Internet data source. Control circuitry may parse the text to determine the competition result (e.g., whether the participant of interest won the game).

At step 845, control circuitry 404 applies the competition result to the set of inputs of the competition rule to estimate a rank of a participant of the at least one instance. For example, the competition rule may be a deterministic rule such as the best-of-seven games competition rule, which takes as inputs the number of games won by a team, and the total number of games played thus far. Control circuitry 404 may determine the number of games won by a participant of interest based in part on the determination of a competition result from step 840, and on the total number of games played so far. Control circuitry may then apply the competition result (e.g., determined from step 840) to the competition rule (e.g., the best-of-seven games competition rule), along with other parameters to estimate a rank of the participant. For example, control circuitry 404 may determine that a basketball team, Rayzors, has won four of four games played in a tournament round. Control circuitry 404 may determine that the basketball team has satisfied the requirements of the best-of-seven games rule and is qualified for a subsequent round of competition.

Control circuitry 404 may estimate a rank of participants based on the performance of the participants within a round of competition. For example, in the case of a best-of-seven games competition rule for a tournament, control circuitry may partition teams into several different categories of rank based on a number of rounds of competition through which the respective teams have advanced. In the case of a three-round tournament, of eight participants playing in two player matches per round, teams that have advanced to the final third round rank higher than teams that have advanced to the second round, who rank higher than teams that have not advanced beyond the first round. Within each rank category, control circuitry 404 estimates a rank for each team based on number of fraction of games won to total games played. For example, in a best-of-seven games competition rule for a tournament, a team may qualify for a subsequent round if it wins four consecutive games. In this case, the team would not need to proceed with playing the remaining three games, and would have a winning percentage of 100%. Alternatively, a team may qualify by winning four games out of seven games played. In this case, the team would have a winning percentage of 57%. The team with the higher winning percentage would be ranked higher. For example, control circuitry 404 may determine that the team Rayzors has qualified for the second round of competition in a three-round tournament of eight teams. Because the Rayzors have qualified for the second round, control circuitry 404 will estimate a rank that is between 1 and 4. In order to further estimate the rank, control circuitry 304 may compare the winning percentages of each team. For example, control circuitry 304 may estimate the Rayzors as having a rank of 3 of the four ranks, based on determining that the Rayzors have the third-highest winning percentage. Further methods of estimating ranks are described further below in reference to Fig. 9.

At step 845, control circuitry 404 determines whether the estimated rank (e.g., determined from step 845) exceeds a threshold. In some embodiments, control circuitry 404 may retrieve the threshold from a user profile that was set manually by the user. This provides a user with fine control over the threshold. For example, a user may not be interested in recording further games of a participant if its rank does not exceed a threshold selected by the user. In some embodiments, control circuitry 404 may determine the threshold by monitoring user interactions. For example, control circuitry may determine, based on a history of user interactions (e.g., viewing of media assets, recording of media assets, browsing of media related to a participant of interest), that a user is interested in participants that are ranked at least top three, or expected to participate in at least a semi-final match (e.g., a second round of a three round tournament of eight players). For example, control circuitry 404 may determine that the estimated rank of 3 of the Rayzors exceeds a threshold of 5. If control circuitry determines that the estimated rank exceeds the threshold, the process proceeds to step 860, otherwise the process proceeds to step 855. It should be understood that the term exceed may be on a numeric or non-numeric scale. It should also be understood that the term exceed may refer to a measure of an absolute value or a relative value, and may not be related to a specific sort order. For example, with reference to ranks, a rank of 1 exceeds a rank of 5, even though the number 5 is numerically greater than 1.

At step 860, control circuitry 404 determines whether a preschedule recordings command was received. Based on determining that the preschedule recordings command has not been received, the process proceeds to step 840, otherwise the process proceeds to step 865. The preschedule recordings command has been discussed previously in reference to step 822. If a preschedule recordings command has previously been received, then a list of scheduled recordings includes instances from the set of media assets (e.g., related to the competition) in which the participant of interest is expected to play. However, if the preschedule recordings command has not been previously received, then subsequent instances of the set of media assets (e.g., related to the competition) will be added to the list of scheduled recordings.

At step 865, based on determining that the estimated rank exceeds the threshold, and based on determining that the preschedule recordings command has been received, control circuitry 404 adds a subsequent instance of the set of media assets to the list of scheduled recordings. For example, control circuitry 404 may retrieve detailed information about the set of media assets, and parse the detailed information for a schedule broadcast time of a next instance of a media asset in which the participant is scheduled to appear. The process next proceeds to step 840 after step 865.

At step 855, control circuitry may determine whether the participant's appearance in one or more subsequent instances of the plurality of instances of the set of media assets will have a meaningful effect on the final outcome of the competition. For example, competition may be a season qualification for a playoff tournament where 30 of 40 games have been played. Control circuitry may determine that a participant is unable to qualify among a set of top eight teams in a best case scenario where the participant wins all subsequent games. Alternatively, or in addition, control circuitry may determine that the participant is unlikely to qualify among the set of top eight teams, even in view of the expected performance of the other teams in the competition, which may be determined by calculating a moving average prediction of each team's scores.

At step 857, control circuitry 404 may modify the list of scheduled recordings for the set of media assets to add a subsequent instance in which the participant's appearance will have a meaningful effect on the final outcome of the competition. For example, as discussed above in reference to step 855, control circuitry may determine that a participant is unable to qualify among a set of top eight teams in a best case scenario, or that the participant is unlikely to qualify in view of the expected performance of other teams. Based on one or more, or a combination of these determinations, control circuitry may determine that the participant's appearance in subsequent instances of the plurality of instances of the set of media assets will not have a meaningful effect on the final outcome of the competition and modify the list of recordings for the set of media assets to remove a subsequent instance in which the participant is scheduled or expected to appear.

Alternatively, at step 855 control circuitry may determine that the participant's appearance in one or more subsequent instances of the plurality of instances of the set of media assets will have a meaningful effect on the final outcome of the competition and at step 857 control circuitry may modify the list of recordings for the set of media assets to add a subsequence instance in which the participant is scheduled or expected to appear. In some embodiments, this step may be similar to steps 660 and 790 discussed further above in reference to FIG. 6 and 7. For example, control circuitry 404 may add the subsequent instance in which the participant is eligible to participate, in addition to and/or in replacement of the instances previously added (e.g., in steps 815 and/or 822).

In the alternative, or in addition, at step 855, control circuitry may determine whether the participant is eligible to participate in subsequent instances of the plurality of instances of the set of media assets. In some embodiments, a participant may no longer be eligible to advance to a final round of a competition (e.g., as indicated by the estimated rank not exceeding the threshold in step 850). However, the participant may still be eligible to participate in a consolation or repechage match. Control circuitry 404 may parse detailed information for the set of media assets (e.g., related to the competition) in order to determine whether any repechage and/or consolations matches are scheduled. Control circuitry 404 may parse the metadata to determine which of the instances relate to a consolation match. Control circuitry 404 may determine based on a competition rule (e.g., the competition rule determined from step 835, or a different competition rule for the repechage and/or consolation match) whether the participant of interest is eligible for participation in the repechage and/or consolation match. For example, control circuitry 404 may determine that a participant is eligible if its rank within a certain range (e.g., less than rank 5). Based on determining that the participant is eligible, the process proceeds to step 857, otherwise, the process proceeds to step 859.

In a process where control circuitry at step 855 may determine whether the participant is eligible to participate in subsequent instances of the plurality of instances of the set of media assets, at step 857, control circuitry 404 may modify the list of scheduled recordings for the set of media assets to add a subsequent instance in which the participant is eligible to participate. This step may be similar to steps 660 and 790 discussed further above in reference to FIG. 6 and 7. For example, control circuitry 404 may add the subsequent instance (e.g., the repechage and/or consolation match) in which the participant is eligible to participate, in addition to and/or in replacement of the instances previously added (e.g., in steps 815 and/or 822).

At step 859, control circuitry 404 determines whether the preschedule recordings command has been received. Based on determining that the preschedule recordings command has not been received, the process proceeds to step 840. Otherwise, the process proceeds to step 870.

At step 870, control circuitry generates for display (e.g., the display of FIG. 1) a prompt that requests that a user confirm one of several menu options. A first menu option requests that the user confirm a removal of subsequent instances of the set of media assets from the list of scheduled recordings. For example, control circuitry may request confirmation from a user to cancel scheduled recordings for games in which the participant of interest (e.g., Rayzors), is no longer eligible to play (e.g., as indicated by the estimated rank not exceeding the threshold in step 850). A second menu option requests that a user confirm recording instances of the set of media assets that include another participant. For example, control circuitry may request confirmation from the user to schedule recordings of another participant that may be of interest to the user (e.g., as determined from a preference hierarchy as discussed above in reference to FIG. 1). A third menu option requests that a user confirm whether to modify a list of scheduled recordings. For example, control circuitry 404 may request that a user confirm whether it would like to manually modify the list of scheduled recordings (e.g., as discussed above in reference to FIG. 1). The process next proceeds to one of steps 872, 874, 876, and/or 878.

At step 872, control circuitry 404 determines whether a selection of the first selectable option to confirm removal of subsequent instances of the set of media assets has been received. Based on receiving the user selection, the process proceeds to step 873, otherwise it returns to step 870.

At step 873, control circuitry 404 removes from the list of scheduled recordings, subsequent instances of the set of media asset. Control circuitry 404 may remove subsequent instances of the set of media assets by searching through the list of scheduled recordings for media assets related to the competition. For example, control circuitry 404 may search through the list by search terms for the media asset.

At step 874, control circuitry 404 determines whether a selection of the second selectable option to record instances of the set of media assets that include another participant. Based on receiving the user selection, the process proceeds to step 875, otherwise it returns to step 870.

At step 875, control circuitry 404 modifies the list of scheduled recordings to add subsequent instances in which another participant participates. This step has been described in further detail above with reference to FIG. 1. For example, control circuitry 404 may determine another participant of interest based on a user profile, search for instances and scheduled broadcast times and broadcast channels that include the another participant of interest and add the instances to the list of scheduled recordings.

At step 876, control circuitry 404 determines whether a selection of the third modify the list of scheduled recordings has been received. Based on receiving the user selection, the process proceeds to step 877, otherwise it returns to step 870.

At step 877, control circuitry 404 generates for display a menu to modify the list of scheduled recordings. This step has been discussed in further detail above with reference to FIG. 1. For example, control circuitry 404 may generate for display the list of scheduled recordings and receive input from the user indicating which instances in the list of scheduled recordings should be removed, and/or whether new instances should be added.

At step 878, control circuitry 404 determines whether a selection of the fourth selectable option to exit the program without changes has been received. Based on receiving the user selection, the process proceeds to step 840, otherwise it returns to step 870.

It is contemplated that the descriptions of FIG. 8 may be used with any other embodiment of this disclosure. In addition, the descriptions described in relation to the algorithm of FIG. 8 may be done in alternative orders or in parallel to further the purposes of this disclosure. As a further example, in some embodiments several steps may be evaluated in parallel, using multiple logical processor threads, or the algorithm may be enhanced by incorporating branch predictions. Furthermore, it should be noted that the process of FIG. 8 may be implemented on a combination of appropriately configured software and hardware, and that any of the devices or equipment discussed in relation to FIGS. 4-5 could be used to implement one or more portions of the process.

In some embodiments, control circuitry 404 may perform steps 830-877 of FIG. 8, and corresponding steps 740-790 of FIG.7 and corresponding steps 630-660 of FIG. 6 during the progression of a media asset scheduled for recording from the set of media assets, and modify the list of scheduled recordings during the progression of the media asset. For example, control circuitry may monitor the progress of a basketball game - a first round of a three-round tournament among eight teams that uses a best- of- five games competition rule. Control circuitry 404 may retrieve result information during a game from the first round that is scheduled for recording and is currently broadcast. For example, control circuitry 404 may retrieve scores from an Internet data source, social media feed, or other suitable data source while a basketball game from the first round is in progress. Control circuitry 404 may determine a pending result based on the result information, and an estimated rank based on the result information. For example, control circuitry 404 may determine that the Rayzors team (e.g., a participant of interest) is currently winning the round, and estimated to have a rank of 3 among the eight teams in the tournament. Control circuitry 404 may (e.g., at step 780 of FIG. 7, step 850 of FIG. 8 and other related steps) determine whether the estimated rank (e.g., rank of 3) exceeds a threshold (e.g., a threshold of 4).

Control circuitry 404 may (e.g., at step 790 of FIG. 7, steps 855-877 and related steps) modify the list of scheduled recordings for the set of media assets based on determining whether the rank exceeds the threshold. As part of this determination, control circuitry may determine whether modifying the list of scheduled recordings either generates any conflicts that are to be resolved, or can resolve conflicts among scheduling. For example, if a prescheduled recording option has not been selected, control circuitry 404 may schedule a subsequent instance of the set of media assets recording (e.g., a subsequent game in which the Rayzors participant of interest is expected to play), and determine whether the scheduling of the recording of the Rayzors generates a scheduling conflict with another program (e.g., by comparing scheduled recording times, scheduled broadcast channel, and durations). If control circuitry 404 determines that there is a recording conflict, control circuitry 404 may generate for display a prompt to the user to request user input to resolve the conflict (e.g., select one of conflicted scheduled recordings to be recorded), or may automatically resolve the conflict based on a user preference profile to determine which of the two media assets scheduled for recording is more relevant to a user based on attributes of the user's profile.

For example, if a preschedule recordings option has been selected, and control circuitry 404 determines that an estimated rank does not exceed the threshold, control circuitry 404 may modify the list of scheduled recordings to remove subsequent instances from the list of scheduled recordings. Control circuitry may determine whether removing any of the instances from the list of scheduled recordings also resolves recording conflicts (e.g., where two media assets were scheduled for recording at the same time). Control circuitry 404 may maintain the scheduled recording for another media asset that had a conflict with the removed instance.

In some embodiments, the steps discussed in the aforementioned paragraphs may be performed on an instance of a set of media assets that are related to a competition, but that is not currently recorded or scheduled for recording. For example, control circuitry 404 may condition the adding of subsequent instances from the set of media assets to the list of scheduled recordings based on determining that the estimated rank of a participant in the instance exceeds a threshold. For example, control circuitry may receive the user command while an instance of the set of media assets is being broadcast (e.g., from a server), or while the instance of the set of the media assets is being viewed (e.g., from a user equipment).

FIG. 9 is a flowchart of an illustrative process 900 for control circuitry (e.g., control circuitry 404) to determine a competition rule and a set of inputs of the competition rule in accordance with some embodiments of the present disclosure. In some embodiments, FIG. 9 may represent a detailed version of step 835 of FIG. 8. In some embodiments, this algorithm may be encoded on to non-transitory storage medium (e.g., storage device 408) as a set of instructions to be decoded and executed by processing circuitry (e.g., processing circuitry 406). Processing circuitry may, in turn, provide instructions to other sub-circuits contained within control circuitry 404, such as the tuning, video generating, encoding, decoding, encrypting, decrypting, scaling, analog/digital conversion circuitry, and the like.

At step 910, control circuitry determines a type of competition organization and/or a type of game and/or type of competition and/or type of a competition type of the plurality of instances of media assets based the detailed information (e.g., as retrieved in step 824). Control circuitry may parse the detailed information to search for text (e.g., using a natural language processor), and/or may search for metadata fields within the metadata of the detailed information. For example, control circuitry may determine based on detailed information from the set of media assets that the type of competition organization is NCAA, type of game is basketball, and that the type of competition is a tournament. The process next proceeds to step 920.

At step 920, control circuitry 404 cross-references the type of competition organization and/or type of game and/or type of competition against a database of competition rules. For example, control circuitry may cross-reference the fields, NCAA, basketball, and tournament against the database. In some embodiments the database is located on a user equipment device, in some embodiments the database may be located at a server. The process next proceeds to step 930.

At step 930, control circuitry 404 retrieves the competition rule and a set of inputs of the competition rule based on the cross-referencing. For example, based on the cross-referencing step 920, control circuitry may retrieve a rule as a function with inputs and outputs. For example, control circuitry may retrieve a best of seven games rule which takes as inputs a number of games that have been won and a number of games that have been played. As outputs, the rule may indicate whether a participant has been eliminated or advanced, and also provide a score (e.g., as a fraction of the games won to games played). In some embodiments, control circuitry may download a data structure representing the rule to be executing locally on a user equipment device. In some embodiments, control circuitry 404 may download a pointer to a data structure stored at a server. Control circuitry 404 may apply transmit inputs based on the pointer in order to execute a function at the server. In some embodiments, where the media guidance application is a cloud based service, control circuitry 404 may be located at a server and execute the rule at the server.

There are generally at least two categories of competition rules which may be retrieved and applied: (a) deterministic rules, and (b) probabilistic rules. In deterministic rules, an outcome of a competition can be determined with certainty based on whether a certain condition has been met. In probabilistic rules, a likelihood of an outcome can be determined based on multiple independent factors. Probabilistic rules may apply in cases where the likelihood of an outcome varies with time as information from multiple different factors is received. The likelihood determined from a probabilistic rule has increasing certainty as the number of independent factors is reduced (e.g., as the number of remaining games and/or matches decreases). Although the aforementioned discussions have referred to deterministic and probabilistic rules as separate and distinct for different competitions, it should be understood that more than one competition rule may apply to a competition (e.g., a competition may have an associated one or more deterministic rules, and an associated one or more probabilistic rules).

Examples of deterministic rules include "best of N," "N elimination," other suitable play-off formats, and tie-breaking rules. These deterministic rules typically apply to play-off tournaments. In a "best of N" deterministic rule, a participant advances to a subsequent round of a competition (e.g., the tournament), based on winning a simple majority of N games, where N is any natural number. In some embodiments, participants must play all games, regardless of whether or not a participant has satisfied the best of N condition. In these embodiments, control circuitry may determine that the best of N condition has been satisfied, and then query a user as to whether to continue recording a remaining number of games in the match, as the games will not affect the outcome of the subsequent round qualification. Control circuitry may determine that the best of N condition has not been satisfied and then query a user as to whether to cancel recording of subsequent matches in the same around, as the participant of interest can no longer qualify for a subsequent round. In some embodiments, the round terminates when the best of N condition is satisfied. For example, if a participant of interest either wins or loses four consecutive games in a best-of-7 game rule, the subsequent 3 games will not be played. In these embodiments, control circuitry may determine that the best of N condition has not been satisfied and may query the user whether to cancel recording of subsequent matches in the same around, as the participant of interest can no longer qualify for a subsequent round. In an "N elimination" deterministic rule, a participant does not advance to a subsequent round of a tournament if it loses either any N games, and/or any N consecutive games. For example, control circuitry may determine that a participant of interest has been eliminated by losing two games in a competition following a 2-game elimination deterministic rule, and then query a user as to whether to continue recording subsequent rounds.

In some embodiments, the deterministic rules may includes tie-breaking rules such as usage of goal-average, goal-difference, run-rate, or other score parameters in order to break ties to determine which of two participants proceeds to a next round of a tournament. For example, a deterministic rule in a league competition may be that a set of top eight teams, ranked by number of winning games across a seasons, qualify for a playoff tournament. However, when applying such a rule, two or more teams may be tied for one or more ranks. For example, two teams may be tied for the third rank, and two teams may be tied for the eighth rank. Control circuitry may apply this top eight teams rule to determine that the two teams tied for the third rank qualify for the playoff tournament. In order to satisfy the eight teams limit, control circuitry would need to determine how to break the tie between the two teams tied for the eighth rank. For example, a goal-average tie-breaker rule may specify that a winning team of a tie is determined by an average of total number of points scored by a team across all matches, divided by total number of points scored against the team across all matches. Control circuitry may apply a goal-average tie-breaker rule to determine that a first team that has scored 30 points against all other teams, and lost 10 points against all other teams has a goal-average of 3. Control circuitry may apply the goal-average tie-breaker rule to determine that a second team which has scored 20 points against all other teams and lost 5 points against all other teams has a goal-average of 4. Control circuitry may compare the goal-average of 3 of the first team and the goal-average of 4 of the second team and determine that the second team wins the tie-breaker based on the goal-average rule.

For example, a goal-difference tie-breaker rule may specify that a winning team of a tie is determined by a difference of a total number of points scored by a team across all matches and a total number of points scored against the team across all matches. Control circuitry may apply a goal-difference tie-breaker rule to determine that a first team, which has scored 30 points against all other teams, and lost 10 points against all other teams, has a goal-difference of 20. Control circuitry may apply the goal-difference tie-breaker rule to determine that a second team, which has scored 20 points against all other teams and lost 5 points against all other teams, has a goal-difference of 15. Control circuitry may compare the goal-difference of 20 of the first team and the goal-difference of 15 of the second team and determine that the first team wins the tie-breaker based on the goal-difference rule. Note that the outcome of the goal-average tie-breaker rule and the goal-difference tie-breaker rule are different.

For example, in sports or competitions that include multiple iterations within a game (e.g., innings per game in baseball, overs per game in cricket, matches per game in tennis, etc.), a run-rate tie-breaker rule may specify that a winning team of a tie is determined by a difference between an average number of points scored by a team per iteration across all games and an average number of points scored against the team per iteration across all games. Control circuitry may apply a run-rate tie-breaker rule to determine that a first team, which has scored 30 points against all other teams in 5 iterations, and has lost 10 points against all other teams in 10 iterations, has a run-rate of 5 (e.g., 30 points scored for the team divided by 5 iterations minus 10 points scored against the team divided by 10 iterations). Control circuitry may apply the run-rate tie-breaker rule to determine that a second team, which has scored 20 points against all other teams in 10 iterations and lost 5 points against all other teams in 5 iterations, has a run-rate of 1 (e.g., 20 points scored for the team divided by 10 iterations minus 5 points scored against the team divided by 5 iterations). Control circuitry may compare the run-rate of 5 of the first team and the run-rate of 1 of the second team and determine that the first team wins the tie-breaker based on the run-rate rule. Note that the outcome of the run-rate tie-breaker rule and the goal-average tie-breaker rule are different. The tie-breaking rules, discussed in reference to deterministic rules, may also apply to the probabilistic rules discussed below.

Examples of probabilistic rules include season qualification. These probabilistic rules depend on multiple events rather than the outcome of a series of games in which the participant of interest plays. For example, a season qualification rule may indicate that the top eight ranked teams by winning ratio of each time for all games may advance to a final tournament. In a league of 20 teams, there would be at least 19 games. Control circuitry may enable a user to condition recording of instances (e.g., games) where a participant of interest is scheduled to play, based on whether the participant of interest is likely to advance to the final round. However, the likelihood that a participant of interest will advance to a final round continuously changes as games are played amongst all participants of the league. Accordingly, after each game played, a probability of a participant of interest advancing to a final round may be updated. Control circuitry may iteratively update a probability and/or estimated rank of a team, and compare it against a threshold.

It is contemplated that the steps or descriptions of FIG. 9 may be used with any other embodiment of this disclosure. In addition, the descriptions described in relation to the algorithm of FIG. 9 may be done in alternative orders or in parallel to further the purposes of this disclosure. For example, conditional statements and logical evaluations, such as those at 910 and 920, may be performed in any order or in parallel or simultaneously to reduce lag or increase the speed of the system or method. As a further example, in some embodiments, several instances of a term in the query may be evaluated in parallel, using multiple logical processor threads, or the algorithm may be enhanced by incorporating branch prediction. Furthermore, it should be noted that the process of FIG. 9 may be implemented on a combination of appropriately configured software and hardware, and that any of the devices or equipment discussed in relation to FIGS. 4-5 could be used to implement one or more portions of the process.

It should be understood that the competitions discussed herein could refer to sports competitions, academic competitions, electronic gaming competitions, voting competitions or any other suitable competition. For example, in the case of voting competitions, control circuitry 404 could receive a request to record all debates for a political party's primary elections, as long as a candidate (e.g., a participant of interest) is likely to appear in the primary elections. Because the ranking of candidates in primary elections is highly dynamic, it may follow a probabilistic rule as discussed previously. For example, in the case of electronic gaming competitions and academic competitions (e.g., quiz bowl), they typically follow "best of N" or "N elimination" rules.

The processes discussed above are intended to be illustrative and not limiting. More generally, the above disclosure is meant to be exemplary and not limiting. Only the claims that follow are meant to set bounds as to what the present invention includes.

## Claims

1. A system for performing adaptive scheduling of media assets recording comprising:
means for receiving a user command to schedule for recording a plurality of instances of a set of media assets relating to a competition involving a plurality of participants;
means for generating a list of scheduled recordings for the set of media assets by allocating a data structure for the list thereby scheduling recordings and adding to the list of scheduled recordings entries for the plurality of instances of the set of media assets;
means for retrieving detailed information about the set of media assets;
means for determining a competition rule for the set of media assets and a set of inputs of the competition rule based on the detailed information;
means for retrieving from a data source a competition result for at least one instance of the plurality of instances;
means for estimating a rank of a participant of the at least one instance by applying the competition result to the set of inputs of the competition rule;
means for determining whether the estimated rank exceeds a threshold; and
means for modifying the list of scheduled recordings for the set of media assets by at least one of:
adding a subsequent instance of the set of media assets to the list of scheduled recordings in the data structure based on determining that the estimated rank does exceed the threshold; and
removing a subsequent instance of the set of media assets from the list of scheduled recordings in the data structure based on determining that the estimated rank does not exceed the threshold.

2. The system of claim 1,
wherein:
the means for determining the competition rule is configured to determine, based on the detailed information, the competition rule and a set of inputs of the competition rule; and
the system further comprises means for retrieving result information about at least one instance of the plurality of instances, wherein the means for determining the competition result is configured to determine the competition result from the result information, and the means for estimating the rank of the participant is configured to estimate the rank by applying the competition result to the set of inputs of the competition rule.

3. The system of claim 2, further comprising:
means for adding to the list of scheduled recordings each instance of the plurality of instances of the set of media assets, subsequent to receiving the user command to schedule for recording the plurality of instances of the set of media assets and prior to the modifying the list of scheduled recordings.

4. The system of claim 2 or 3, further comprising:
means for determining a change in the rank of the participant where the competition rule comprises a deterministic rule; and/or
means for determining a likelihood of a change in the rank of the participant where the competition rule comprises a probabilistic rule.

5. The system of claim 2, 3 or 4, wherein the competition rule comprises a deterministic rule and the system comprises means for determining a change in the rank of the participant, wherein the system further comprises at least one of:
(a) means for determining that the participant has lost a number of matches that exceeds a second threshold, and means for determining that the estimated rank does not exceed the threshold;
(b) means for determining that the participant has won a number of matches that exceeds at least half of a total number of expected matches, and means for determining that the estimated rank exceeds the threshold; and
(c) means for determining that a decrease in the rank of the participant falls below a second threshold, and means for determining, based on determining that the decrease in the rank of the participant falls below the second threshold, that the participant is eligible to compete in subsequent instances of the plurality of instances of the set of media assets.

6. The system of claim 2, 3 or 4, wherein the competition rule comprises a probabilistic rule, and further comprising:
means for determining a likelihood of a change in the rank of the participant;
means for determining the likelihood of a decrease in the rank of the participant; and
means for generating for display prior to modifying the list of scheduled recordings, a prompt requesting that a user confirm a removal of subsequent instances of the set of media assets from the list of scheduled recordings.

7. A method for adaptive scheduling of media assets recording comprising:
receiving a user command to schedule for recording a plurality of instances of a set of media assets relating to a competition involving a plurality of participants;
generating a list of scheduled recordings for the set of media assets by allocating a data structure for the list, thereby scheduling recordings and adding to the list of scheduled recordings entries for the plurality of instances of the set of media assets;
retrieving detailed information about the set of media assets;
determining a competition rule for the set of media assets and a set of inputs of the competition rule based on the detailed information;
retrieving from a data source a competition result for at least one instance of the plurality of instances;
estimating a rank of a participant of the at least one instance by applying the competition result to the set of inputs of the competition rule;
determining whether the estimated rank exceeds a threshold; and modifying the list of scheduled recordings for the set of media assets by
at least one of:
adding a subsequent instance of the set of media assets to the list of scheduled recordings in the data structure based on determining that the estimated rank does exceed the threshold; and
removing a subsequent instance of the set of media assets from the list of scheduled recordings in the data structure based on determining that the estimated rank does not exceed the threshold.

8. The method of claim 7, further comprising:
retrieving result information about at least one instance of the plurality of instances; and
determining a competition result from the result information, wherein said estimating the rank of the participant comprises applying the competition result to the set of inputs of the competition rule.

9. The method of claim 7 or 8, wherein the set of media assets are broadcast within a day.

10. The method of claim 7, 8 or 9, wherein:
the method further comprises adding to the list of scheduled recordings each instance of the plurality of instances of the set of media assets, subsequent to receiving the user command to schedule for recording the plurality of instances of the set of media assets and prior to the modifying the list of scheduled recordings.

11. The method of any of claims 7-10, wherein:
the competition rule comprises a deterministic rule, and wherein the applying the competition result to estimate the rank further comprises determining a change in the rank of the participant; and/or
the competition rule comprises a probabilistic rule, and wherein the applying the competition result to estimate the rank further comprises determining a likelihood of a change in the rank of the participant.

12. The method of an of claims 7-11, wherein the competition rule comprises a deterministic rule, the applying the competition result to estimate the rank further comprises determining a change in the rank of the participant, and at least one of:
(a) the determining the change in the rank of the participant further comprises determining that the participant has lost a number of matches that exceeds a second threshold, and the method further comprises determining that the estimated rank does not exceed the threshold;
(b) the determining the change in the rank of the participant further comprises determining that the participant has won a number of matches that exceeds at least half of a total number of expected matches, and the method further comprises determining that the estimated rank exceeds the threshold; and
(c) the method further comprises determining that a decrease in the rank of the participant falls below a second threshold, and, based on determining that the decrease in the rank of the participant falls below the second threshold, determining that the participant is eligible to compete in subsequent instances of the plurality of instances of the set of media assets.

13. The method of any of claims 7-12, wherein:
the competition rule comprises a probabilistic rule, and wherein the applying the competition result to estimate the rank further comprises determining a likelihood of a change in the rank of the participant;
the determining the likelihood further comprises determining the likelihood of a decrease in the rank of the participant; and
the method further comprises prior to modifying the list of scheduled recordings, generating for display a prompt requesting that a user confirm a removal of subsequent instances of the set of media assets from the list of scheduled recordings.

14. A computer program comprising computer readable instructions that, when executed by one or more processors, cause the one or more processors to perform the method of any of claims 7-13.

## Patentansprüche

1. System zum Durchführen einer adaptiven Planung der Aufzeichnung von Medienbeständen, umfassend:
ein Mittel zum Empfangen eines Benutzerbefehls, um das Aufzeichnen einer Vielzahl von Instanzen eines Satzes von Medienbeständen in Bezug auf einen Wettbewerb zu planen, an dem eine Vielzahl von Teilnehmern beteiligt ist;
ein Mittel zum Erzeugen einer Liste geplanter Aufzeichnungen für den Satz von Medienbeständen durch ein Zuordnen einer Datenstruktur für die Liste, wodurch Aufzeichnungen geplant und Einträge zur Liste geplanter Aufzeichnungen für die Vielzahl von Instanzen des Satzes von Medienbeständen hinzugefügt werden;
ein Mittel zum Abrufen detaillierter Informationen zu dem Satz von Medienbeständen;
ein Mittel zum Bestimmen einer Wettbewerbsregel für den Satz von Medienbeständen und eines Satzes von Eingaben der Wettbewerbsregel auf Grundlage der detaillierten Informationen;
ein Mittel zum Abrufen eines Wettbewerbsergebnisses von einer Datenquelle für mindestens eine Instanz der Vielzahl von Instanzen;
ein Mittel zum Schätzen eines Rangs eines Teilnehmers der mindestens einen Instanz durch ein Anwenden des Wettbewerbsergebnisses auf den Satz von Eingaben der Wettbewerbsregel;
ein Mittel zum Bestimmen, ob der geschätzte Rang einen Schwellenwert überschreitet; und
ein Mittel zum Modifizieren der Liste geplanter Aufzeichnungen für den Satz von Medienbeständen durch mindestens eines der folgenden:
ein Hinzufügen einer nachfolgenden Instanz des Satzes von Medienbeständen zu der Liste geplanter Aufzeichnungen in der Datenstruktur auf Grundlage der Bestimmung, dass der geschätzte Rang den Schwellenwert überschreitet; und
ein Entfernen einer nachfolgenden Instanz des Satzes von Medienbeständen aus der Liste geplanter Aufzeichnungen in der Datenstruktur auf Grundlage der Bestimmung, dass der geschätzte Rang den Schwellenwert nicht überschreitet.

2. System nach Anspruch 1,
wobei:
das Mittel zum Bestimmen der Wettbewerbsregel dazu konfiguriert ist, auf Grundlage der detaillierten Informationen die Wettbewerbsregel und einen Satz von Eingaben der Wettbewerbsregel zu bestimmen; und
das System ferner ein Mittel zum Abrufen von Ergebnisinformationen zu mindestens einer Instanz der Vielzahl von Instanzen umfasst, wobei das Mittel zum Bestimmen des Wettbewerbsergebnisses dazu konfiguriert ist, das Wettbewerbsergebnis aus den Ergebnisinformationen zu bestimmen, und das Mittel zum Schätzen des Rangs des Teilnehmers dazu konfiguriert ist, den Rang durch ein Anwenden des Wettbewerbsergebnisses auf den Satz von Eingaben der Wettbewerbsregel zu schätzen.

3. System nach Anspruch 2, ferner umfassend:
ein Mittel zum Hinzufügen jeder Instanz der Vielzahl von Instanzen des Satzes von Medienbeständen zu der Liste geplanter Aufzeichnungen nach dem Empfangen des Benutzerbefehls zum Planen der Aufzeichnung der Vielzahl von Instanzen des Satzes von Medienbeständen und vor dem Modifizieren der Liste von geplanten Aufnahmen.

4. System nach Anspruch 2 oder 3, ferner umfassend:
ein Mittel zum Bestimmen einer Rangänderung des Teilnehmers, wenn die Wettbewerbsregel eine deterministische Regel umfasst; und/oder
ein Mittel zum Bestimmen einer Wahrscheinlichkeit einer Rangänderung des Teilnehmers, wenn die Wettbewerbsregel eine Wahrscheinlichkeitsregel umfasst.

5. System nach Anspruch 2, 3 oder 4, wobei die Wettbewerbsregel eine deterministische Regel umfasst und das System ein Mittel zum Bestimmen einer Rangänderung des Teilnehmers umfasst, wobei das System ferner mindestens eines der folgenden umfasst:
(a) ein Mittel zum Bestimmen, dass der Teilnehmer eine Anzahl von Spielen verloren hat, die einen zweiten Schwellenwert überschreitet, und ein Mittel zum Bestimmen, dass der geschätzte Rang den Schwellenwert nicht überschreitet;
(b) ein Mittel zum Bestimmen, dass der Teilnehmer eine Anzahl von Spielen gewonnen hat, die mindestens die Hälfte einer Gesamtzahl erwarteter Spiele übersteigt, und ein Mittel zum Bestimmen, dass der geschätzte Rang den Schwellenwert überschreitet; und
(c) ein Mittel zum Bestimmen, dass eine Herabsetzung des Rangs des Teilnehmers unter einen zweiten Schwellenwert fällt, und ein Mittel zum Bestimmen auf Grundlage der Bestimmung, dass die Herabsetzung des Rangs des Teilnehmers unter den zweiten Schwellenwert fällt, dass der Teilnehmer berechtigt ist, in nachfolgenden Instanzen der Vielzahl von Instanzen des Satzes von Medienbeständen zu konkurrieren.

6. System nach Anspruch 2, 3 oder 4, wobei die Wettbewerbsregel eine Wahrscheinlichkeitsregel umfasst und ferner Folgendes umfasst:
ein Mittel zum Bestimmen einer Wahrscheinlichkeit einer Rangänderung des Teilnehmers;
ein Mittel zum Bestimmen der Wahrscheinlichkeit einer Herabsetzung des Rangs des Teilnehmers; und
ein Mittel zum Erzeugen einer Eingabeaufforderung zur Anzeige vor dem Modifizieren der Liste geplanter Aufzeichnungen, die anfordert, dass ein Benutzer eine Entfernung nachfolgender Instanzen des Satzes von Medienbeständen aus der Liste geplanter Aufzeichnungen bestätigt.

7. Verfahren zur adaptiven Planung der Aufzeichnung von Medienbeständen, umfassend:
ein Empfangen eines Benutzerbefehls, um das Aufzeichnen einer Vielzahl von Instanzen eines Satzes von Medienbeständen in Bezug auf einen Wettbewerb zu planen, an dem eine Vielzahl von Teilnehmern beteiligt ist;
ein Erzeugen einer Liste geplanter Aufzeichnungen für den Satz von Medienbeständen durch ein Zuordnen einer Datenstruktur für die Liste, wodurch Aufzeichnungen geplant und Einträge zur Liste geplanter Aufzeichnungen für die Vielzahl von Instanzen des Satzes von Medienbeständen hinzugefügt werden;
ein Abrufen detaillierter Informationen zu dem Satz von Medienbeständen;
ein Bestimmen einer Wettbewerbsregel für den Satz von Medienbeständen und eines Satzes von Eingaben der Wettbewerbsregel auf Grundlage der detaillierten Informationen;
ein Abrufen eines Wettbewerbsergebnisses von einer Datenquelle für mindestens eine Instanz der Vielzahl von Instanzen;
ein Schätzen eines Rangs eines Teilnehmers der mindestens einen Instanz durch ein Anwenden des Wettbewerbsergebnisses auf den Satz von Eingaben der Wettbewerbsregel;
ein Bestimmen, ob der geschätzte Rang einen Schwellenwert überschreitet; und ein Modifizieren der Liste geplanter Aufzeichnungen für den Satz von Medienbeständen durch mindestens eines der folgenden:
ein Hinzufügen einer nachfolgenden Instanz des Satzes von Medienbeständen zu der Liste geplanter Aufzeichnungen in der Datenstruktur auf Grundlage der Bestimmung, dass der geschätzte Rang den Schwellenwert überschreitet; und
ein Entfernen einer nachfolgenden Instanz des Satzes von Medienbeständen aus der Liste geplanter Aufzeichnungen in der Datenstruktur auf Grundlage der Bestimmung, dass der geschätzte Rang den Schwellenwert nicht überschreitet.

8. Verfahren nach Anspruch 7, ferner umfassend:
ein Abrufen von Ergebnisinformationen über mindestens eine Instanz der Vielzahl von Instanzen; und
ein Bestimmen eines Wettbewerbsergebnisses aus den Ergebnisinformationen, wobei das Schätzen des Rangs des Teilnehmers das Anwenden des Wettbewerbsergebnisses auf den Satz von Eingaben der Wettbewerbsregel umfasst.

9. Verfahren nach Anspruch 7 oder 8, wobei der Satz von Medienbeständen innerhalb eines Tages gesendet wird.

10. Verfahren nach Anspruch 7, 8 oder 9, wobei:
das Verfahren ferner das Hinzufügen jeder Instanz der Vielzahl von Instanzen des Satzes von Medienbeständen zu der Liste geplanter Aufzeichnungen nach dem Empfangen des Benutzerbefehls zum Planen der Aufzeichnung der Vielzahl von Instanzen des Satzes von Medienbeständen und vor dem Modifizieren der Liste von geplanten Aufnahmen umfasst.

11. Verfahren nach einem der Ansprüche 7-10, wobei:
die Wettbewerbsregel eine deterministische Regel umfasst, und wobei das Anwenden des Wettbewerbsergebnisses zum Schätzen des Rangs ferner das Bestimmen einer Änderung des Rangs des Teilnehmers umfasst; und/oder
die Wettbewerbsregel eine Wahrscheinlichkeitsregel umfasst, und wobei das Anwenden des Wettbewerbsergebnisses zum Schätzen des Rangs ferner das Bestimmen einer Wahrscheinlichkeit der Änderung des Rangs des Teilnehmers umfasst.

12. Verfahren nach einem der Ansprüche 7-11, wobei die Wettbewerbsregel eine deterministische Regel umfasst, und wobei das Anwenden des Wettbewerbsergebnisses zum Schätzen des Rangs ferner das Bestimmen einer Änderung des Rangs des Teilnehmers umfasst, und mindestens eines der folgenden:
(a) das Bestimmen der Rangänderung des Teilnehmers ferner das Bestimmen umfasst, dass der Teilnehmer eine Anzahl von Spielen verloren hat, die einen zweiten Schwellenwert übersteigt, und das Verfahren ferner das Bestimmen umfasst, dass der geschätzte Rang den Schwellenwert nicht überschreitet;
(b) das Bestimmen der Rangänderung des Teilnehmers ferner das Bestimmen umfasst, dass der Teilnehmer eine Anzahl von Spielen gewonnen hat, die mindestens die Hälfte einer Gesamtzahl erwarteter Spiele übersteigt, und das Verfahren ferner das Bestimmen umfasst, dass der geschätzte Rang den Schwellenwert überschreitet; und
(c) das Verfahren ferner das Bestimmen, dass eine Herabsetzung des Rangs des Teilnehmers unter einen zweiten Schwellenwert fällt, und, auf Grundlage der Bestimmung, dass die Herabsetzung des Rangs des Teilnehmers unter den zweiten Schwellenwert fällt, das Bestimmen umfasst, dass der Teilnehmer berechtigt ist, in nachfolgenden Instanzen der Vielzahl von Instanzen des Satzes von Medienbeständen zu konkurrieren.

13. Verfahren nach einem der Ansprüche 7-12, wobei:
die Wettbewerbsregel eine Wahrscheinlichkeitsregel umfasst, und wobei das Anwenden des Wettbewerbsergebnisses, um den Rang zu schätzen, ferner das Bestimmen einer Wahrscheinlichkeit der Rangänderung des Teilnehmers umfasst;
das Bestimmen der Wahrscheinlichkeit ferner das Bestimmen der Wahrscheinlichkeit einer Herabsetzung des Rangs des Teilnehmers umfasst; und
das Verfahren ferner vor dem Modifizieren der Liste geplanter Aufzeichnungen das Erzeugen zur Anzeige einer Eingabeaufforderung umfasst, die anfordert, dass ein Benutzer eine Entfernung nachfolgender Instanzen des Satzes von Medienbeständen aus der Liste geplanter Aufzeichnungen bestätigt.

14. Computerprogramm, das computerlesbare Anweisungen umfasst, die, wenn sie von einem oder mehreren Prozessoren ausgeführt werden, den einen oder die mehreren Prozessoren veranlassen, das Verfahren nach einem der Ansprüche 7-13 durchzuführen.

## Revendications

1. Système permettant d'effectuer une programmation adaptative d'enregistrement de contenus multimédia comprenant :
un moyen pour recevoir une commande d'utilisateur pour programmer l'enregistrement d'une pluralité d'instances d'un ensemble de contenus multimédia concernant une compétition impliquant une pluralité de participants ;
un moyen pour générer une liste d'enregistrements programmés pour l'ensemble de contenus multimédia en allouant une structure de données pour la liste, programmant ainsi des enregistrements et en ajoutant à la liste d'enregistrements programmés des entrées pour la pluralité d'instances de l'ensemble de contenus multimédia ;
un moyen pour récupérer des informations détaillées sur l'ensemble des contenus multimédia ;
un moyen pour déterminer une règle de compétition pour l'ensemble de contenus multimédia et un ensemble d'entrées de la règle de compétition sur la base des informations détaillées ;
un moyen pour récupérer depuis une source de données un résultat de compétition pour au moins une instance de la pluralité d'instances ;
un moyen pour estimer un rang d'un participant de l'au moins une instance en appliquant le résultat de compétition à l'ensemble d'entrées de la règle de compétition ;
un moyen pour déterminer si le rang estimé dépasse un seuil ; et
un moyen pour modifier la liste d'enregistrements programmés pour l'ensemble de contenus multimédia par au moins l'un parmi :
l'ajout d'une instance ultérieure de l'ensemble de contenus multimédia à la liste d'enregistrements programmés dans la structure de données sur la base de la détermination que le rang estimé dépasse le seuil ; et
la suppression d'une instance ultérieure de l'ensemble de contenus multimédia de la liste d'enregistrements programmés dans la structure de données sur la base de la détermination que le rang estimé ne dépasse pas le seuil.

2. Système selon la revendication 1, dans lequel :
le moyen pour déterminer la règle de compétition est configuré pour déterminer, sur la base des informations détaillées, la règle de compétition et un ensemble d'entrées de la règle de compétition ; et
le système comprend en outre un moyen pour récupérer des informations de résultat concernant au moins une instance de la pluralité d'instances, dans lequel le moyen pour déterminer le résultat de compétition est configuré pour déterminer le résultat de compétition à partir des informations de résultat, et le moyen pour estimer le rang du participant est configuré pour estimer le rang en appliquant le résultat de compétition à l'ensemble d'entrées de la règle de compétition.

3. Système selon la revendication 2, comprenant en outre :
un moyen pour ajouter à la liste d'enregistrements programmés chaque instance de la pluralité d'instances de l'ensemble de contenus multimédia, après la réception de la commande d'utilisateur pour programmer l'enregistrement de la pluralité d'instances de l'ensemble de contenus multimédia et avant la modification de la liste d'enregistrements programmés.

4. Système selon la revendication 2 ou 3, comprenant en outre :
un moyen pour déterminer un changement du rang du participant lorsque la règle de compétition comprend une règle déterministe ; et/ou
un moyen pour déterminer une probabilité d'un changement du rang du participant lorsque la règle de compétition comprend une règle probabiliste.

5. Système selon la revendication 2, 3 ou 4, dans lequel la règle de compétition comprend une règle déterministe et le système comprend un moyen pour déterminer un changement du rang du participant, dans lequel le système comprend en outre au moins l'un parmi :
(a) un moyen pour déterminer que le participant a perdu un nombre de matchs qui dépasse un second seuil, et un moyen pour déterminer que le rang estimé ne dépasse pas le seuil ;
(b) un moyen pour déterminer que le participant a remporté un nombre de matchs qui dépasse au moins la moitié d'un nombre total de matchs attendus, et un moyen pour déterminer que le rang estimé dépasse le seuil ; et
(c) un moyen pour déterminer qu'une diminution du rang du participant tombe en dessous d'un second seuil, et un moyen pour déterminer, sur la base de la détermination que la diminution du rang du participant tombe en dessous du second seuil, que le participant est éligible pour concourir dans des instances ultérieures de la pluralité d'instances de l'ensemble de contenus multimédia.

6. Système selon la revendication 2, 3 ou 4, dans lequel la règle de compétition comprend une règle probabiliste, et comprenant en outre :
un moyen pour déterminer une probabilité d'un changement du rang du participant ;
un moyen pour déterminer la probabilité d'une diminution du rang du participant ; et
un moyen pour générer pour affichage avant de modifier la liste d'enregistrements programmés, une invite demandant qu'un utilisateur confirme une suppression d'instances ultérieures de l'ensemble de contenus multimédia de la liste d'enregistrements programmés.

7. Procédé de programmation adaptative d'enregistrement de contenus multimédia comprenant :
la réception d'une commande d'utilisateur pour programmer l'enregistrement d'une pluralité d'instances d'un ensemble de contenus multimédia concernant une compétition impliquant une pluralité de participants ;
la génération d'une liste d'enregistrements programmés pour l'ensemble de contenus multimédia en allouant une structure de données pour la liste, programmant ainsi des enregistrements et en ajoutant à la liste d'enregistrements programmés des entrées pour la pluralité d'instances de l'ensemble de contenus multimédia ;
la récupération d'informations détaillées sur l'ensemble de contenus multimédia ;
la détermination d'une règle de compétition pour l'ensemble de contenus multimédia et d'un ensemble d'entrées de la règle de compétition sur la base des informations détaillées ;
la récupération depuis une source de données d'un résultat de compétition pour au moins une instance de la pluralité d'instances ;
l'estimation d'un rang d'un participant de l'au moins une instance en appliquant le résultat de compétition à l'ensemble d'entrées de la règle de compétition ;
le fait de déterminer si le rang estimé dépasse un seuil ; et la modification de la liste d'enregistrements programmés pour l'ensemble de contenus multimédia par au moins l'un parmi :
l'ajout d'une instance ultérieure de l'ensemble de contenus multimédia à la liste d'enregistrements programmés dans la structure de données sur la base de la détermination que le rang estimé dépasse le seuil ; et
la suppression d'une instance ultérieure de l'ensemble de contenus multimédia de la liste d'enregistrements programmés dans la structure de données sur la base de la détermination que le rang estimé ne dépasse pas le seuil.

8. Procédé selon la revendication 7, comprenant en outre :
la récupération d'informations de résultat concernant au moins une instance de la pluralité d'instances ; et
le fait de déterminer un résultat de compétition à partir des informations de résultat, dans lequel ladite estimation du rang du participant comprend l'application du résultat de compétition à l'ensemble d'entrées de la règle de compétition.

9. Procédé selon la revendication 7 ou 8, dans lequel l'ensemble de contenus multimédia sont diffusés en une journée.

10. Procédé selon la revendication 7, 8 ou 9, dans lequel :
le procédé comprend en outre l'ajout à la liste d'enregistrements programmés de chaque instance de la pluralité d'instances de l'ensemble de contenus multimédia, après la réception de la commande d'utilisateur pour programmer l'enregistrement de la pluralité d'instances de l'ensemble de contenus multimédia et avant la modification de la liste d'enregistrements programmés.

11. Procédé selon l'une quelconque des revendications 7 à 10, dans lequel :
la règle de compétition comprend une règle déterministe, et dans lequel l'application du résultat de compétition pour estimer le rang comprend en outre la détermination d'un changement du rang du participant ; et/ou
la règle de compétition comprend une règle probabiliste, et dans lequel l'application du résultat de compétition pour estimer le rang comprend en outre la détermination d'une probabilité d'un changement du rang du participant.

12. Procédé selon l'une quelconque des revendications 7 à 11, dans lequel la règle de compétition comprend une règle déterministe, l'application du résultat de compétition pour estimer le rang comprend en outre la détermination d'un changement du rang du participant, et au moins l'une parmi :
(a) la détermination du changement du rang du participant comprend en outre la détermination que le participant a perdu un nombre de matchs qui dépasse un second seuil, et le procédé comprend en outre la détermination que le rang estimé ne dépasse pas le seuil ;
(b) la détermination du changement du rang du participant comprend en outre la détermination que le participant a remporté un nombre de matchs qui dépasse au moins la moitié d'un nombre total de matchs attendus, et le procédé comprend en outre la détermination que le rang estimé dépasse le seuil ; et
(c) le procédé comprend en outre la détermination qu'une diminution du rang du participant tombe en dessous d'un second seuil, et, sur la base de la détermination que la diminution du rang du participant tombe en dessous du second seuil, la détermination que le participant est éligible pour concourir dans des instances ultérieures de la pluralité d'instances de l'ensemble de contenus multimédia.

13. Procédé selon l'une quelconque des revendications 7 à 12, dans lequel :
la règle de compétition comprend une règle probabiliste, et dans lequel l'application du résultat de compétition pour estimer le rang comprend en outre la détermination d'une probabilité d'un changement du rang du participant ;
la détermination de la probabilité comprend en outre la détermination de la probabilité d'une diminution du rang du participant ; et
le procédé comprend en outre, avant de modifier la liste d'enregistrements programmés, la génération pour affichage d'une invite demandant qu'un utilisateur confirme une suppression d'instances ultérieures de l'ensemble de contenus multimédia de la liste d'enregistrements programmés.

14. Programme informatique comprenant des instructions lisibles par ordinateur qui, lorsqu'elles sont exécutées par un ou plusieurs processeurs, amènent les un ou plusieurs processeurs à mettre en œuvre le procédé selon l'une quelconque des revendications 7 à 13.
